(19) **Europäisches Patentamt**
**European Patent Office**
**Office européen des brevets**

(11) **EP 1 489 136 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(51) Int Cl.:
*C08K 9/02* (2006.01)    *C08K 9/04* (2006.01)
*C09C 1/00* (2006.01)    *C04B 35/536* (2006.01)
*C09K 21/10* (2006.01)

(21) Anmeldenummer: 04102760.8

(22) Anmeldetag: **16.06.2004**

(54) **Verwendung von thermisch expandierbaren Graphit-Intercalationsverbindungen für die Herstellung von Brandschutz-Abdichtungen und Verfahren zu ihrer Herstellung**

Use of thermoexpandable graphite intercalation compounds for the preparation of fireproof seals and process for their preparation

Utilisation de composés thermoexpansibles d'intercalation du graphite pour la préparation de joints ignifuges

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.06.2003 DE 10329889**

(43) Veröffentlichungstag der Anmeldung:
**22.12.2004 Patentblatt 2004/52**

(73) Patentinhaber: **HILTI Aktiengesellschaft
9494 Schaan (LI)**

(72) Erfinder:
• **Reinheimer, Arne
87668 Zellerberg (DE)**

• **Wenzel, Antje
86928 Hofstetten (DE)**
• **Münzenberger, Herbert
65191 Wiesbaden (DE)**

(74) Vertreter: **Wildi, Roland
Hilti Aktiengesellschaft,
Corporate Intellectual Property
Feldkircherstrasse 100
Postfach 333
9494 Schaan (LI)**

(56) Entgegenhaltungen:
**EP-A- 0 400 402    FR-A- 2 677 975**

**Beschreibung**

Gegenstand der vorliegenden Erfindung ist die Verwendung von thermisch expandierbaren Graphit-Intercalationsverbindungen als intumeszierendes Brandschutzadditiv in Polymermatrices für die Herstellung von intumeszierenden Brandschutz-Abdichtungen für Durchbrüche, Durchführungen und sonstigen Öffnungen in Wänden, Böden und/oder Decken von Gebäuden, sowie Verfahren zur Herstellung der verwendeten thermisch expandierbaren Graphit-Intercalationsverbindungen.

Durchbrüche, Durchführungen und sonstige Öffnungen in Wänden, Böden und/oder Decken von Gebäuden müssen zum Zwecke des Brandschutzes mit Brandschutz-Abdichtungen versehen werden, um zu verhindern, daß im Brandfall das Feuer und der Rauch sich durch diese Öffnungen ausbreiten können. Solche Brandschutz-Abdichtungen können im Form von härtenden formlosen Brandschutzmassen oder in Form von vorgefertigten Streifen, Ringen, Platten und dergleichen eingesetzt werden, die in die abzudichtenden Öffnungen eingebracht oder mit denen diese Öffnungen abgedeckt werden.

Intumeszierende Massen für solche Brandschutz-Abdichtungen enthalten üblicherweise als intumeszierendes Brandschutzadditiv expandierbare Graphit-Intercalationsverbindungen, die auch als Blähgraphit bekannt und im Handel erhältlich sind.

Es handelt sich dabei um Verbindungen, die zwischen den Gitterschichten des Graphits eingelagerte Fremdbestandteile (Intercalate) enthalten. Solche expandierbaren Graphit-Intercalationsverbindungen werden üblicherweise dadurch hergestellt, daß man Graphitteilchen in einer Lösung dispergiert, die ein Oxidationsmittel und die einzulagernde Gastverbindung enthält. Üblicherweise angewandte Oxidationsmittel sind Salpetersäure, Kaliumchlorat, Chromsäure, Kaliumpermanganat, Wasserstoffperoxid und dergleichen. Als einzulagernde Verbindung wird beispielsweise konzentrierte Schwefelsäure verwendet, wobei die Umsetzung bei Temperaturen von 60°C bis 130°C während bis zu vier Stunden erfolgt (siehe beispielsweise EP-B-0 085 121). Alternativ dazu ist es auch möglich, Metallchloride in Gegenwart von beispielsweise Chlorgas in den Graphit einzulagern (E. Stumpp, Physica (1981), 9-16). Ein weiteres Verfahren zur Herstellung solcher Schwefelsäure-Graphitpartikel ist beispielsweise aus der US-Patentschrift 4,091,083 bekannt, welches darin besteht, daß man kristalline Graphitteilchen in Schwefelsäure dispergiert, die Mischung unter Zugabe von Wasserstoffperoxid rührt und das Rühren so lange fortsetzt, bis die Schwefelsäure in den Graphit eingelagert worden ist. Anschließend wird die überschüssige Säure abgetrennt, die in dem Festprodukt vorhandene restliche Säure durch mehrfaches Waschen mit Wasser entfernt und das Material getrocknet.

Die expandierbaren Graphit-Intercalationsverbindungen oder Blähgraphite unterliegen beim Erhitzen auf eine Temperatur oberhalb der sogenannten Onset-Temperatur einer starken Volumenzunahme mit Expansionsfaktoren von mehr als 200, die dadurch verursacht wird, daß die in die Schichtstruktur des Graphits eingelagerten Intercalatverbindungen durch das schnelle Erhitzen auf diese Temperatur unter Bildung gasförmiger Stoffe zersetzt werden, wodurch die Graphitpartikel senkrecht zu der Schichtebene expandiert oder aufgebläht werden (EP-B-0 085 121).

Dieses Expansionsverhalten wird in intumeszierenden Massen ausgenützt, die beispielsweise zur Brandschutz-Abdichtung von Kabel- und Rohr-Durchführungen durch Wände und Decken von Gebäuden eingesetzt werden. Im Brandfall erfolgt nach Erreichen der Onset-Temperatur eine Ausdehnung der Graphitteilchen und damit der die Durchführung abdichtenden intumeszierenden Masse, so daß auch nach dem Abbrennen der durch die Durchführung geführten Kabel und/oder Kunststoffrohre der Durchbruch des Feuers durch die Durchführung verhindert beziehungsweise verzögert wird.

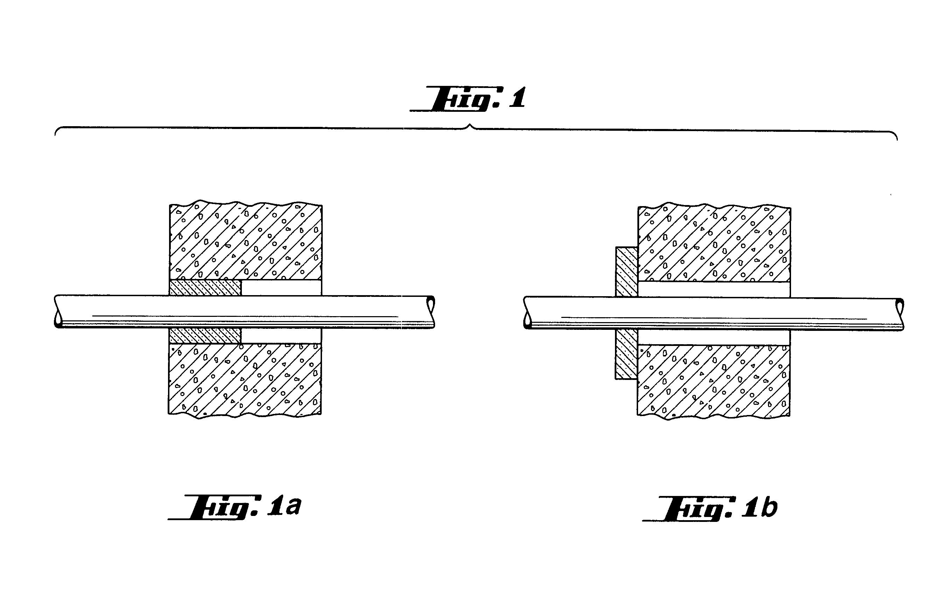

Bei der Brandschutz-Abdichtung von Durchbrüchen, Durchführungen und sonstigen Öffnungen in Wänden, Böden und/oder Decken von Gebäuden ist es nun einerseits möglich, die Brandschutz-Abdichtung in die Öffnung, beispielsweise den Ringspalt, um ein durch die Wand hindurch geführtes Kunststoffrohr einzuführen, wie es in der Figur 1a der beigefügten Zeichnung dargestellt ist, oder in Form einer Abdeckung auf der Wand vorzusehen, wie es in der Figur. 1b dargestellt ist. Im Fall des Einbringens einer Brandschutz-Abdichtung als Rohrabschottung, wie es in der Figur 1a dargestellt ist, in den verbleibenden Ringspalt oder dann, wenn die Brandschutz-Abdichtung durch die Baukonstruktion verdeckt wird, ergeben sich Probleme dadurch, daß in diesem Fall der Wärmeeintrag im Brandfall, durch den die Expansion des intumeszierenden Brandschutzadditivs in der Brandschutzmasse ausgelöst wird, über eine verhältnismäßig kleine Oberfläche erfolgt (nämlich die in dem Ringspalt vorliegende Vorderseite der Brandschutz-Abdichtung im Fall der Figur 1a), während im Fall des Aufbringens der Brandschutz-Abdichtung auf der Wand die intumeszierende Brandschutzmasse großflächig der starken Hitze des Feuers ausgesetzt ist.

Da beispielsweise durch die Durchführung geführte Kunststoffrohre in beiden Fällen im Brandfall nahezu gleich schnell kollabieren, ergeben sich im Fall des Einbringens der Brandschutzmasse in die Öffnung selbst Probleme dadurch, daß dann, wenn das in der Öffnung vorliegende abzudichtende Material kollabiert bevor die Onset-Temperatur der intumeszierenden Brandschutzmasse erreicht ist, ein Durchschlagen des Feuers und des Rauches durch die Öffnung möglich wird.

Dies ist insbesondere der Fall bei herkömmlichen intumeszierenden Brandschutz-Abdichtungen, welche die üblicherweise eingesetzten Blähgraphite als intumeszierendes Brandschutzadditiv enthalten, da deren charakteristische Kenngrößen des Expansionsverhaltens gerade für diesen Anwendungsfall nicht zu befriedigen vermögen. Die charakteristischen Kenngrößen hierzu sind die Onset-Temperatur des Blähgraphits, das heißt die Temperatur, bei der die Expansion der Partikel des Blähgraphites beginnt. Von weiterer Bedeutung ist die Expansionsgeschwindigkeit im Bereich der Onset-Temperatur, das maximal erzielbare Expansionsvolumen sowie der mittlere Ausdehnungskoeffizient. Auf genaue Definitionen der Bestimmung dieser Expansionsparameter wird weiter unten Bezug genommen werden.

Nach dem Stand der Technik werden überwiegend kommerziell erhältliche Schwefelsäure-Graphitpartikel als intumeszierende Brandschutzadditive in solchen intumeszierenden Brandschutz-Abdichtungen eingesetzt, die über eine Onset-Temperatur von 200°C verfügen. Zwar sind auch modifizierte Schwefelsäure-Graphitpartikel im Handel erhältlich, die niedrige Onset-Temperaturen von 150°C beziehungsweise 160°C aufweisen, die jedoch in Hinblick auf ihr Expansionsvolumen und ihre Expansionsgeschwindigkeiten nicht zu befriedigen vermögen. Die Expansionsparameter zweier typischer kommerzieller Blähgraphittypen sind in der nachfolgenden Tabelle 1 aufgeführt:

**Tabelle 1:** Expansionsparameter zweier typischer kommerzieller Blähgraphittypen (Teilchengröße 250-400 $\mu$m, durch Trockensiebung isoliert)

| | Schwefelsäuregraphit | Schwefelsäure/ Salpetersäuregraphit |
|---|---|---|
| Onset [°C] | 200 | 160 |
| Volumen bzgl. Einwaage in [% mg$^{-1}$] | 245 | 192 |
| $T_{100}$ in [°C] | 361 | 268 |
| Geschwindigkeit im Bereich Onset 1 in [% °C$^{-1}$] | 8 | 13 |
| Geschwindigkeit zwischen Onset 1 und 2 in [% °C$^{-1}$] | - | 3 |
| Geschwindigkeit im Bereich Onset 2 in [% °C$^{-1}$] | - | 29 |
| Mittlerer Ausdehnungskoeffizient zwischen TMA-Onset 1 und $T_{100}$ in [K$^{-1}$] | 0,09 | 0.11 |

Es hat sich nunmehr gezeigt, daß bei Einsatz solcher kommerzieller Blähgraphite und beim Einbringen der Brandschutz-Abdichtung in das Innere der zu verschließenden Öffnungen die Expansionsparameter der handelsüblichen Blähgraphite nicht dazu ausreichen bei dem in diesem Fall geringeren Wärmeeintrag die Intumeszenz der Brandschutz-Abdichtung derart schnell auszulösen und ein entsprechendes Expansionsvolumen zu erreichen, daß die Brandschutz-Abdichtung auch beim Kollabieren eines durch die Öffnung hindurchgeführten Kunststoffrohres sichergestellt wird.

Die Aufgabe der vorliegenden Erfindung besteht nun darin, eine intumeszierende Brandschutz-Abdichtung bereitzustellen, mit der es im Brandfall gelingt, auch bei niedrigeren Temperaturen und bei ungünstigen Bedingungen der Wärmeübertragung auf die intumeszierende Brandschutzmasse den Verschluß der Öffnungen deutlich zu verbessern, so daß auch größere Öffnungen und dickwandigere Rohre mit großem Rohrquerschnitt sicher abgedichtet werden können.

Es wurde nunmehr gefunden, daß die als intumeszierendes Brandschutzadditiv verwendeten Blähgraphite zum Einsatz in Brandschutz-Abdichtungen, die in den abzudichtenden Öffnungen eingebracht oder durch die Konstruktion abdeckt werden, folgende Expansionsparameter aufweisen müssen (bei einer Teilchengröße von 250 bis 400 $\mu$m, durch Trockensiebung isoliert), die in der nachfolgenden Tabelle 2 aufgeführt sind.

**Tabelle 2**

| | |
|---|---|
| Önset [°C] | $\leq 160$ |
| Volumen bzgl Einwaage in [% mg$^{-1}$] | $\geq 550$ |
| Geschwindigkeit im Bereich Onset in [% °C$^{-1}$] | $\geq 20$ |
| Mittlerer Ausdehnungskoeffizient zwischen TMA-Onset 1 und $T_{100}$ in [K$^{-1}$] | $\geq 0,1$ |

Die Einstellung dieser Expansionsparameter über die Teilchengröße der Graphitpartikel - indem zum Beispiel größere Graphitteilchen ein höheres Expansionsvolumen zur Folge haben - ist nicht geeignet, da größere Graphitpartikel bei den bei der Herstellung der intumeszierenden Brandschutz-Abdichtung auftretenden Scherkräften für das Einbringen der Brandschutzadd/itive in die Polymermatrices, beispielsweise durch Spritzguß, Extrusion, Mischprozesse etc., leichter geschädigt und abgebaut werden als kleinere Graphitteilchen. Die Folge ist üblicherweise ein Zerbrechen der Graphitteilchen mit einer damit einhergehenden Korrosion an Maschinen und Werkzeugen durch die aus den Blähgraphitteilchen freigesetzte Säure sowie eine unerwünschte Reaktion der freigesetzten Säure mit anderen Formulierungsbestandteilen und eine Beeinträchtigung des Expansionsverhaltens.

Eine weitere Aufgabe der folgenden Erfindung besteht also darin, das Intumeszenzverhalten der intumeszierenden Brandschutzabdichtungen bei gleichbleibender und üblicher Teilchengröße des intumeszierenden Brandschutzadditives sicherzustellen.

Es hat sich nun überraschenderweise gezeigt, daß diese Aufgaben erfindungsgemäß gelöst werden können durch die Verwendung von thermisch expandierbaren Graphit-Intercalationsverbindungen mit einem Gehalt an mindestens einem definierten Metallhalogenid und mindestens einem Nitroalkan als intumeszierendes Brandschutzadditiv in Polymermatrices für die Herstellung von intumeszierenden Brandschutz-Abdichtungen.

Gegenstand der vorliegenden Erfindung ist daher die Verwendung gemäß Anspruch 1. Ein weiterer Gegenstand der Erfindung betrifft ein Verfahren zur Herstellung der erfindungsgemäß verwendeten thermisch expandierbaren Graphit-Intercalationsverbindungen gemäß Anspruch 25. Die Unteransprüche betreffen bevorzugte Ausführungsformen dieses Erfindungsgegenstandes.

Die Erfindung betrifft daher die Verwendung mindestens einer thermisch expandierbaren Graphit-Intercalationsverbindung, die einen Gehalt an A) mindestens einem Metallhalogenid mindestens eines der Elemente Fe, Al, Sb, Zn, Y, Cr und Ni und B) mindestens einem Nitroalkan der allgemeinen Formel $CH_3(CH_2)_nNO_2$, worin n eine ganze Zahl mit einem Wert von 0 bis 10 bedeutet, sowie deren Strukturisomere oder Mischungen aufweist, als intumeszierendes Brandschutzadditiv in Polymermatrices für die Herstellung von intumeszierenden Brandschutz-Abdichtungen für Durchbrüche, Durchführungen und sonstigen Öffnungen in Wänden, Böden und/oder Decken von Gebäuden.

Gemäß einer bevorzugten Ausführungsform enthält die Graphit-Intercalationsverbindung zusätzlich mindestens einen Vertreter der $H_2SO_4$, $CH_3COOH$ und $HNO_3$ umfassenden Gruppe von Säuren als Intercalatverbindung, vorzugsweise mindestens eine der folgenden Säure-Kombinationen $H_2SO_4/HNO_3$-, $H_2SO_4/CH_3COOH$- und/oder $CH_3COOH/HNO_3$-Mischungen. Gemäß einer weiter bevorzugten Ausführungsform weist die Graphit-Intercalationsverbindung einen Gehalt an mindestens einem Hydrat mindestens eines der Metallhalogenide $FeCl_3$, $AlCl_3$, $SbCl_5$, $ZnCl_2$, $YCl_3$, $CrCl_3$ und $NiCl_2$ als Intercalatverbindung der Gruppe A) auf, insbesondere ein $FeCl_3$-Hydrat der folgnden Formeln: $FeCl_3 \cdot 5\ H_2O$, $FeCl_3 \cdot 6\ H_2O$, $FeCl_3 \cdot 7\ H_2O$, $FeCl_3 \cdot 12\ H_2O$ und/oder hydrolisiertes $FeCl_3$-Hexahydrat der allgemeinen Formel $[FeCl_n(H_2O)_{6-n}]Cl_{3-n} \cdot n\ H_2O$, in der n eine ganze Zahl mit einem Wert von 1 bis 3 bedeutet.

Vorzugsweise enthält die erfindungsgemäß verwendete Graphit-Intercalationsverbindung als Nitroalkan der Gruppe B) Nitromethan, Nitroethan und 1-Nitropropan oder deren Mischungen.

Die erfindungsgemäß verwendete Graphit-Intercalationsverbindung besitzt vorzugsweise eine - durch Sieben eingestellte - Teilchengröße von 100 bis 1500 μm, vorzugsweise von 125 bis 1000 μm, noch bevorzugter von 250 bis 400 μm.

Gemäß einer besonders bevorzugten Ausführungsform der Erfindung besitzt die erfindungsgemäß eingesetzte Graphit-Intercalationsverbindung die Expansionsparameter, die in der obigen Tabelle 2 angegeben sind, nämlich eine Onset-Temperatur von $\leq 160°C$, ein auf die Einwaage bezogenes Volumen von $\geq 550\ [\%/mg^{-1}]$, eine Geschwindigkeit im Bereich der Onset-Temperatur von $\geq 20\ [\%\ °C^{-1}]$ und einen mittleren Ausdehnungskoeffizienten zwischen TMA-Onset 1 und $T_{100}$ von $\geq 0,1\ [K^{-1}]$.

Die Polymermatrices, in welche gemäß der vorliegenden Erfindung die thermisch expandierbaren Graphit-Intercalationsverbindungen als intumeszierendes Brandschutzadditiv eingearbeitet werden, sind bei der Umgebungstemperatur vorzugsweise plastoelastisch und/oder besitzen einen Erweichungspunkt von etwa 120°C. Die Plastoelastizität ist dabei gemäß dem "Praxis-Handbuch Dichtstoffe" des Industrieverbandes Dichtstoffe (IVD) als Stoff mit überwiegend elastischen und geringen plastischen Eigenschaften definiert. Während elastische Stoffe ein Rückstellungsvermögen von $\geq 70\ [\%]$ aufweisen, besitzen plastoelastische Stoffe ein Rückstellungsvermögen von $\geq 40$ bis $> 70\ [\%]$. elastoplastische Stoffe besitzen ein Rückstellungsvermögen von $\geq 20$ bis $< 40\ [\%]$, und plastische Stoffe besitzen ein Rückstellungsvermögen von $< 20\ [\%]$.

Der Erweichungspunkt oder aber auch die Glasübergangstemperatur (Tg) wird üblicherweise mittels dynamischer Differenzkalorimetrie (DSC) nach DIN EN ISO 111357-1, DIN 53 765 oder ASTM D 3418 bestimmt. Der Erweichungspunkt beziehungsweise die Glasübergangstemperatur der erfindungsgemäß eingesetzten Polymermatrices beträgt $\leq +120°C$.

Vorzugsweise enthält die erfindungsgemäß eingesetzte Polymermatrix als Polymer mindestens einen Vertreter der Polyurethane, plastoelastische Polyurethane, Polyvinylacetate, Polyvinylether, Polyvinylpropionate, Polystyrole, natürliche oder synthetische Kautschuke, Silikone, Poly((meth)acrylate) und Homo- und Copolymere auf der Grundlage von (Meth)acrylaten, Acrylnitril, Vinylestern, Vinylethern, Vinylchlorid und/oder Styrol umfassenden Gruppe sowie Hybrid-Polymere, vorzugsweise solche auf der Grundlage von Polyethylenoxid und/oder Polypropylenoxid mit Dimethylsilyl-Endgruppen. Besonders bevorzugt als Polymere für die Polymermatrix sind Poly(methacrylsäurealkylester), Poly(acrylsäurealkylester), Poly(methacrylsäurearylester), Poly(acrylsäurearylester) und/oder Copolymere davon mit n-Butylacrylat, Vinylacetat und/oder Styrol.

Gemäß einer weiter bevorzugten Ausführungsform stellt die Polymermatrix eine Mischung aus einer wässrigen Polymerdispersion D) und einem niedrigmolekularen, dauerplastischen, flüssigen Polymer E) mit einem Gewichtsverhältnis von D) zu E) von 6:1 bis 1:2,5, vorzugsweise von 4:3 bis 3.4 dar. Dabei kann die wässrige Polymerdispersion D) als Polymer mindestens einen Verteter der Polyurethane, Polyvinylacetate, Polyvinylether, Polyvinylpropionate. Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe, vorzugsweise Poly(methacrylsäurealkylester), Poly(acrylsäurealkylester), Poly(methacrylsäurearylester), Poly(acrylsäurearylester) und/oder Copolymere davon mit n-Butylacrylat, Vinylacetat und/ oder Styrol enthalten.

Gemäß einer weiter bevorzugten Ausführungsform besitzt die wässrige Polymerdispersion D) einen Wassergehalt von 5 bis 60 Gew.-%, vorzugsweise 20 bis 40 Gew.-%, und ist bevorzugt in einer solchen Menge in der Matrixmasse enthalten, daß sich ein Wasseranteil in der Polymermatrix vor dem Trocknen von 0,5 bis 24 Gew.-%, vorzugsweise von 1 bis 10 Gew.-% ergibt.

Das niedrigmolekulare, dauerplastische, flüssige Polymer E) weist vorzugsweise einen K-Wert nach ISO 1628-1 von 9 bis 50 bzw. ein daraus abgeleitetes Molekulargewicht von 250.000 bis 5.000.000 und eine bei 23°C in einer 50%-igen Lösung in Ethylacetat nach DIN ISO 3219 gemessene Viskosität von 40 bis 350 mPa•s auf. Bevorzugte flüssige Polymere E) dieser Art sind Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe, insbesondere Poly(methacrylsäurealkylester), Poly(acrylsäurealkylester), Poly(methacrylsäurearylester), Poly(acrylsäurearylester) und/ oder Copolymere davon mit n-Butylacrylat, Vinylacetat und/oder Styrol.

Gemäß einer bevorzugten Ausführung ist die Graphit-Intercalationsverbindung der oben definierten Art in einer Menge von 1 bis 75 Gew.-%, bevorzugter von 3 bis 30 Gew.-% in der Polymermatrix enthalten.

Vorzugsweise enthält die Polymermatrix zusätzlich übliche Additive F) in üblichen Mengen, beispielsweise keramisierend wirkende Additive F1), wie beispielsweise Glasmehl, Glasfritten, Glasfasern, Ammoniumpolyphosphat, Zinkborat, Kaolin, Ton und/oder Bentonit; ablativ wirkende Brandschutzadditive F2), wie Aluminiumhydroxid, Aluminiumhydroxid-Trihydrat, Böhmit (AlOOH), Magnesiumhydroxid, Zinkborat und/oder Calciumsulfat; ergänzende intumeszierende Brandschutzadditive F3), wie Vermiculit , Natrium-Borosilikat, gekapseltes Natrium-Borosilikat, Melaminpolyphosphat, Melamincyanurat. Ethylendiaminphosphat. Guanidine, Hydrazine und/oder Tris-2-hydroxyethylcyanurat; und/ oder flammhemmende Brandschutzadditive F4), wie bromierte Phosphorsäureester, (Cyclo)aliphatische Bromverbindungen, aromatische Bromverbindungen und/oder Phosphorsäureester; sowie Hilfsstoffe wie Wasser, Stabilisatoren, Pigmente, Fungizide, Pigmentverteiler, Emulgatoren, Weichmacher, Frostschutzmittel und/oder Füllstoffe.

Gemäß einer bevorzugten Ausführungsform der Erfindung liegt das intumeszierende Brandschutzadditiv als erhärtende formbare Brandschutzmasse oder als vorgefertigter Formgegenstand, insbsondere in Form von Streifen, Ringen oder Platten vor.

Ein weiterer Gegenstand der Erfindung betrifft ein Verfahren zur Herstellung der erfindungsgemäß verwendeten, thermisch expandierbaren Graphit-Intercalationsverbindungen, welches dadurch gekennzeichnet ist, daß man a) mindestens ein wasserfreies Metallhalogenid oder ein Metallhalogenid-Hydrat der Gruppe A) in Gegenwart mindestens eines Nitroalkans der Gruppe B) in Graphit intercaliert und dann gegebenenfalls mindestens einen Vertreter der $H_2SO_4$, $CH_3COOH$ und $HNO_3$ umfassenden Gruppe von Intercalatverbindungen C) co-intercaliert oder b) in thermisch expandierbare Graphit-Intercalationsverbindungen in die mindestens ein Vertreter der $H_2SO_4$, $CH_3COOH$ und $HNO_3$ umfassenden Gruppe von Säuren C) intercaliert worden ist, mindestens ein Metallhalogenid-Hydrat A) gegebenenfalls in Gegenwart mindestens eines Nitroalkans der Gruppe B) co-intercaliert.

Vorzugsweise setzt man für die Co-Intercalation Graphit-Intercalationsverbindungen ein, in welche mindestens eine Säure der Gruppe C) unter Verwendung eines Oxidationsmittels mit einem Redoxpotential $E_0 > 0.55$ V intercaliert worden ist.

Gemäß einer weiteren Ausführungsform des erfindungsgemäßen Verfahrens setzt man für die Co-Intercalation Graphit-Intercalationsverbindungen ein, in welche die mindestens eine Säure der Gruppe C) unter Verwendung von Wasserstoffperoxid, Salpetersäure, eines Alkalimetallbromats, -iodats oder -permanganats, von Mangan(IV)-oxid, eines Cer(IV)-salzes und/oder eines Alkalimetallperoxodisulfats als Oxidationsmittel intercaliert worden ist. Bei der Co-Intercalation werden vorzugsweise Graphit-Intercalationsverbindungen verwendet, in welche die mindestens eine Säure der Gruppe C) unter Anwendung eines Molverhältnisses von Oxidationsmittel zu der Säure der Gruppe C) von 0.001 bis 10, vorzugsweise von 0,01 bis 1 intercaliert worden ist.

Gemäß einer weiteren Ausführungsform der Erfindung setzt man für die Co-Intercalation Graphit-Intercalationsverbindungen ein, in welche das mindestens eine wasserfreie Metallhalogenid beziehungsweise Metallhalogenid-Hydrat der Gruppe A) und/oder die mindestens eine Säure der Gruppe C) unter Verwendung eines organischen Lösungsmittels intercaliert worden ist, wobei vorzugsweise Chloroform, Dimethylformamid. Dimethylsulfoxid, Pyridin, Essigsäure, Trifluoressigsäure und/oder Toluol als organisches Lösungsmittel intercaliert worden ist.

Erfindungsgemäß kann man für die Co-Intercalation auch Graphit-Intercalationsverbindungen einsetzen, in welche das mindestens eine wasserfreie Metallhalogenid beziehungsweise Metallhalogenid-Hydrat der Gruppe A) durch Festkörperreaktion und/oder in Gegenwart eines oder mehrerer organischer Lösungsmittel intercaliert worden ist. Vorzugsweise setzt man für die Co-Intercalation Graphit-Intercalationsverbindungen ein, die unter Verwendung von Tetrachlorkohlenstoff, Thionychlorid, eines Nitroalkans der allgemeinen Formel $CH_3(CH_2)_nNO_2$), worin n eine ganze Zahl mit einem Wert von 0 bis 10 bedeutet, sowie deren Strukturisomeren, insbesondere von Nitromethan, Nitroethan und/oder 1-Nitropropan, oder Mischungen davon als organisches Lösungsmittel hergestellt worden sind.

Vorzugsweise führt man die Säuren der Gruppe C) bei den obigen Verfahren zur Herstellung der erfindungsgemäß verwendeten thermisch expandierbaren Graphit-Intercalationsverbindungen in Gegenwart eines Lösungsmittels ein, namentlich in Gegenwart von Chloroform. Dimethylformamid, Pyridin, Essigsäure, Trifluoressigsäure und/oder Toluol, und setzt bei der Co-Intercalation der wasserfreien Metallhalogenide beziehungsweise Metallhalogenid-Hydrate der Gruppe A) als Lösungsmittel Tetrachlorkohlenstoff, Thionylchlorid und/ oder ein Nitroalkan der allgemeinen Formel $CH_3(CH_2)_nNO_2$, worin n eine ganze Zahl mit einem Wert von 0 bis 10 bedeutet, sowie deren Strukturisomere, insbesondere Nitromethan, Nitroethan und/oder 1-Nitropropan, oder Mischungen davon ein.

Gemäß einer bevorzugten Ausführungsform bildet man in einer ersten Stufe durch an sich übliche Oxidation und Intercalation von Schwefelsäure in Graphit, gegebenenfalls in einem dafür geeigneten Lösungsmittel, thermisch expandierbare Graphit-Schwefelsäure-Intercalationsverbindungen und setzt diese in einer zweiten Stufe mit oder ohne Isolation der erhaltenen thermisch expandierbaren Graphit-Schwefelsäure-Intercalationsverbindungen mit wasserfreiem $FeCl_3$ oder $FeCl_3$-Hydrat in einem dafür geeigneten Lösungsmittel um, isoliert dann die thermisch expandierbaren Graphit-Intercalationsverbindungen mit einem Gehalt an Schwefelsäure und $FeCl_3$ beziehungsweise $FeCl_3$-Hydrat und dem Lösungsmittel als Intercalatverbindungen, reinigt und trocknet das Material.

Die Reinigung bewirkt man vorzugsweise durch Waschen mit einem Lösungsmittel, wie Wasser oder einem organischen Lösungsmittel, vorzugsweis Tetrachlorkohlenstoff, Chloroform, Dimethylformamid, Dimethylsulfoxid, Pyridin, Essigsäure, Trifluoressigsäure, Toluol und/oder Thionylchlorid, ein Nitroalkan der allgemeinen Formel $CH_3(CH_2)_nNO_2$, worin n eine ganze Zahl mit einem Wert von 0 bis 10 bedeutet, sowie deren Strukturisomere, insbesondere Nitromethan, Nitroethan und/oder 1-Nitropropan, oder Mischungen davon. Vorzugsweise bewirkt man die Umsetzung mit wasserfreiem $FeCl_3$ beziehungsweise $FeCl_3$-Hydrat bei einer Temperatur im Bereich von -10°C bis 100°C, vorzugsweise bei 10°C bis 50°C, während einer Zeitdauer von 3 Minuten bis 72 Stunden, vorzugsweise 5 bis 48 Stunden, wobei man vorzugsweise Schwefelsäure beziehungsweise $FeCl_3$-Hydrat in einer Menge von $1.0 \cdot 10^{-4}$ bis 20 Mol, vorzugsweise $1.0 \cdot 10^{-34}$ bis 10 Mol, pro Mol Graphit einsetzt.

Die Erfindung sei im folgenden näher unter Bezugnahme auf die beigefügten Zeichnungen erläutert. Die Zeichnungen zeigen:

**Figur 1:** Die Möglichkeiten der Brandschutz-Abdichtung am Bei- spiel einer Rohrabschottung durch Einbau in eine Wand **(Figur 1a),** beziehungsweise der Montage auf der Wand **(Figur 1b) ;**

**Figur 2:** die schematische Darstellung einer durch thermomecha- nische Analyse (TMA) ermittelten TMA-Kurve des Expan- sionsverhaltens einer erfindungsgemäß verwendeten Graphit-Intercalationsverbindung:

**Figur 3:** die TMA-Kurve der gemäß Beispiel 8 erhaltenen Brand- schutz-Abdichtung, und

**Figur 4:** die TMA-Kurve der gemäß Beispiel 9 erhaltenen Brand- schutz-Abdichtung.

Die Messung der Expansionseigenschaften der erfindungsgemäß verwendeten und hergestellten Schwefelsäure-Graphitpartikel erfolgt mit Hilfe der thermomechanischen Analyse (TMA). Mit der thermomechanischen Analyse (TMA) werden Dimensionsänderungen der Schwefelsäure-Graphitpartikel als Funktion der Temperatur und der Zeit gemessen. Hierfür wird die Probe auf einen Probenträger aufgebracht und die Dimensionsänderung der Probe mit Hilfe einer Messsonde in Abhängigkeit von der Aufheiztemperatur und der Aufheizzeit gemessen und aufgezeichnet. Hierzu wird die pulverförmige Probe aus den Schwefelsäure-Graphitpartikeln in einen Korundtiegel eingebracht, der mit einem Stahltiegel abgedeckt wird. Dieser Stahltiegel gewährleistet bei der Ausdehnung der Probe die ruckfreie Übertragung der Dimensionsänderung der Probe auf die Messsonde, welche mit der Oberseite des Stahltiegels in mechanischem Kontakt steht und mit einer einstellbaren Auflast beaufschlagt werden kann. Bei der Durchführung der Bestimmung des Expansionsverhaltens unter Anwendung dieser Meßeinrichtung wurden die folgenden Bedingungen eingehalten:

| | |
|---|---|
| Temperaturprogramm: | Dynamischer Modus (mit vorgeschalteter isothermer Phase während 5 Minuten bei 25°C) |
| Aufheizrate: | 10°C /min |
| Temperaturbereich: | 25°C bis 500°C |
| Analysengas: | Synthetische Luft |

(fortgesetzt)

| | |
|---|---|
| Flußrate: | 50 ml /min |
| Auflast: | 0,06 N |
| Probengefäß: | 150 μl Korundtiegel + 150μl Stahltiegel (als Deckel) |

Als Ergebnis der in dieser Weise durchgeführten thermomechanischen Analyse erhält man die in der

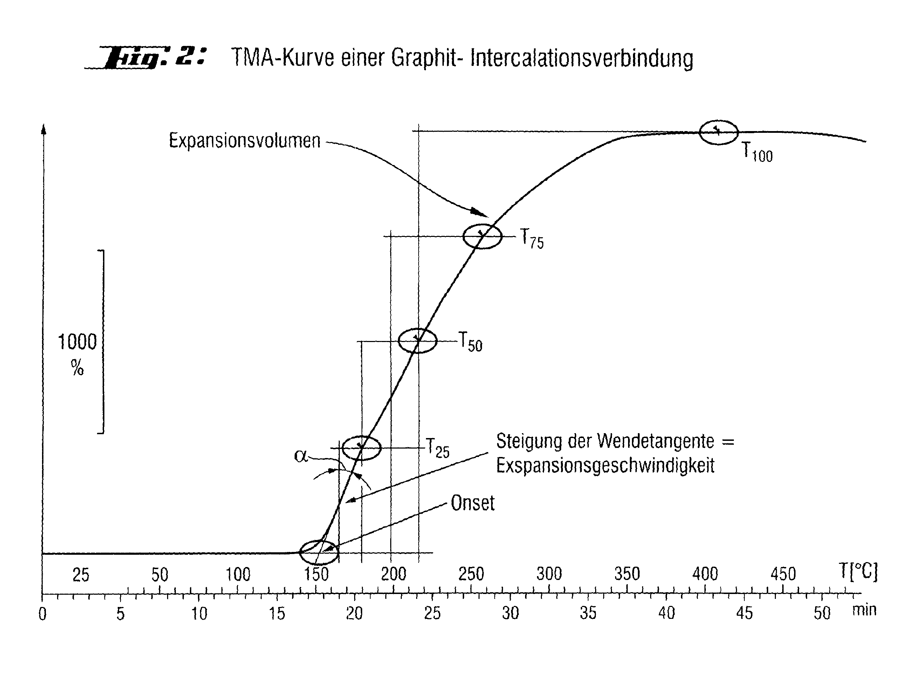

**Figur 2**   der beigefügten Zeichnung dargestellte TMA-Kurve des Expansionsverhaltens einer erfindungsgemäß verwendeten Graphit-Intercalationsverbindung.

Wie in dieser Figur 2 dargestellt ist, ist der Onset der Schwefelsäure-Graphitpartikel mathematisch als Schnittpunkt der Basislinie vor der Längenänderung der Probe und der Wendetangente der Expansionskurve definiert.
Die Expansionsgeschwindigkeit des untersuchten intumeszierenden Materials im Bereich des Onset ist gleich der Steigung dieser Wendetangente. Die Einheit der Expansionsgeschwindigkeit ist demzufolge [% . °C$^{-1}$].
Das Expansionsvolumen entspricht der horizontalen Stufe zwischen der Basislinie und dem Maximum der Kurve. Es gibt die Ausdehnung der Substanz [%] beziehungsweise der Ausgangslänge $L_0$ wieder. Da bei diesen Messungen das Volumen von der eingewogenen Substanzmenge abhängig ist, wird das Expansionsvolumen auf die Einwaage normiert. Als Einheit resultiert die Ausdehnung in [% - mg$^{-1}$]. Der Wert von $T_{100}$ gibt die Temperaturen in [°C] wieder, bei der 100% des maximalen Volumens erreicht worden ist.
Wie aus der Figur 2 ersichtlich ist, gibt die Steigung der Wendetangente lediglich Auskunft über die Anfangsgeschwindigkeit der Expansion. Um das gesamte Expansionsverhalten darstellen zu können, eignet sich die Betrachtung des mittleren Expansionskoeffizienten $\alpha$ in [K$^{-1}$] zwischen dem Onset und dem Maximum der Kurve (=$T_{100}$). Der mittlere Expansionskoeffizient ist definiert als

$$\bar{\alpha} = L_0^{-1} \cdot \Delta L \cdot \Delta T^{-1}$$

worin ΔL für die durch die Temperaturänderung ΔT hervorgerufene Längenänderung der Probe steht.
Sämtliche Messungen erfolgten mit Graphitproben vergleichbarer Partikelgrößenverteilung im Bereich von 250 bis 400 μm. Dies wurde durch Sieben der jeweiligen Graphittypen gewährleistet.
In den nachfolgenden Beispielen sind die Expansionsparameter der hergestellten Schwefelsäure-Graphitpartikel als das normierte Expansionsvolumen, die Expansionsgeschwindigkeit im Bereich des Onset, mittlerer Expansionskoeffizient sowie die Temperatur $T_{100}$ angegeben.
Die folgenden Beispiele dienen der weiteren Erläuterung der Erfindung.
Wie aus den nachfolgenden Beispielen hervorgeht, ermöglicht die erfindungsgemäße Verwendung der definierten thermisch expandierbaren Graphit-Intercalationsverbindungen nicht nur eine Verringerung der Onset-Temperatur, sondern überraschenderweise eine gleichzeitige Steigerung des Expansionsvolumens und der Expansionsgeschwindigkeit im Bereich des Onset, so daß es möglich wird, die oben gestellte Aufgabe zu lösen, nämlich die angestrebte Expansion der Brandschutz-Abdichtung bereits bei niedrigen Temperaturen mit deutlich höherem Expansionsvolumen und höherer Expansionsgeschwindigkeit zu erreichen, so daß auch bei Anwendung der intumeszierenden Brandschutz-Abdichtungen beim Einbau in die Wand oder hinter Konstruktionselementen mit entsprechender geringerer Wärmezufuhr die notwendige Expansion der Brandschutz-Abdichtung im Brandfall sichergestellt bleibt und damit auch nach dem Abbrennen der durch die Durchführung geführten Kabel-Isolierungen und/oder Kunststoffrohre der Durchbruch des Feuers und des Rauches durch die Öffnung verhindert beziehungsweise ausreichend verzögert wird.

**BEISPIEL 1**

Herstellung einer FeCl$_3$/Nitromethan-Graphit-Intercalationsverbindung in Nitromethan (FeCl$_3$/Nitromethan-GIC)

Man löst in einem 100 ml Rundkolben 11,68 g (0,07 Mol) wasserfreies FeCl$_3$ in 15 ml Nitromethan. Anschließend gibt man 5 g (0,42 Mol) Graphit zu und rührt während 18 Stunden bei Raumtemperatur. Man wäscht das Material mit Nitromethan als Lösungsmittel, saugt ab und trocknet.
Die erhaltene FeCl$_3$/Nitromethan-Graphit-Intercalationsverbindung besitzt bei einer Teilchengröße von 250 bis 400 μm, die durch Trockensieben isoliert wird, die in nachfolgenden Tabelle 3 angegebenen Expansionsparameter.

**Tabelle 3**

| | FeCl$_3$/Nitromethan-GIC |
|---|---|
| Onset [°C] | 150 |
| Volumen bzgl. Einwaage in [% mg$^{-1}$] | 570 |
| Geschwindigkeit im Bereich Onset in [% °C$^{-1}$] | 22 |
| Mittlerer Ausdehnungskoeffizient zwischen TMA-Onset 1 und T$_{100}$ in [K$^{-1}$] | 0.12 |

**BEISPIEL 2**

Herstellung der FeCl$_3$/Nitroethan-Graphit-Zwischenpnodukt-Intercalationsverbindung (FeCl$_3$/Nitroethan-GIC).

Nach der Verfahrensweise des Beispiels 1 , jedoch unter Verwendung von Nitroethan anstelle von Nitromethan sowohl als Intercalatverbindung als auch als Lösungsmittel erhält man die FeCl$_3$ und Nitroethan als Intercalatverbindungen enthaltende Graphit-Intercalationsverbindung mit den in der folgenden Tabelle 4 angegebenen, in der beschriebenen Weise ermittelten Expansionsparameter:

**Tabelle 4**

| | FeCl$_3$/ Nitroethan-GIC |
|---|---|
| Onset [°C] | 191 |
| Volumen bzgl. Einwaage in [% mg$^{-1}$] | 365 |
| Geschwindigkeit im Bereich Onset in [% °C$^{-1}$] | 9.59 |
| Mittlerer Ausdehnungskoeffizient zwischen TMA-Onset 1 und T$_{100}$ in [K$^{-1}$] | 0.07 |

**BEISPIEL 3**

Herstellung einer FeCl$_3$/ 1-Nitropropan-Graphit-Intercalationsverbindung (FeCl$_3$/1-Nitropropan-GIC)

Nach der Verfahrensweise des Beispiels 1, jedoch unter Verwendung von 1-Nitropropan als Intercalatverbindung als auch als Lösungsmittel erhält man die Titelverbindung. Die Expansionsparameter dieser Graphit-Intercalationsverbindung, die in der oben beschriebenen Weise ermittelt worden sind, sind in der nachfolgenden Tabelle 5 aufgeführt.

**Tabelle 5**

| | FeCl$_3$ 1-Nitropropan-GIC |
|---|---|
| Onset [°C] | 233 |
| Volumen bzgl. Einwaage in [% mg$^{-1}$] | 134 |
| Geschwindigkeit im Bereich Onset in [% °C$^{-1}$] | 10.65 |
| Mittlerer Ausdehnungskoeffizient zwischen TMA-Onset 1 und T$_{100}$ in [K$^{-1}$] | 0.030 |

**BEISPIEL 4**

Herstellung FeCl$_3$/Nitromethan und Schwefelsäure enthaltenden Graphit-Intercalationsverbindung (FeCl$_3$/Nitromethan/H$_2$SO$_4$-GIC)

Man legt zunächst 10 g (0,84 Mol) Graphit in einem 100 ml Rundkolben vor und versetzt ihn mit 1 ml (0,01 Mol) 30%-igem H$_2$O$_2$ als Oxidationsmittel und 15 ml H$_2$SO$_4$ (95 bis 97%-ig) und rührt während 3 Stunden bei Raumtemperatur. Anschließend wäscht den Graphit mit Wasser bis zu einem pH-Wert von 3 bis 4 und trocknet ihn.
Man gibt 1 g (84 mMol) des in der obigen Weise erhaltenen H$_2$SO$_4$/H$_2$O$_2$-Graphits zu einer Lösung von 1,17 g (7,2 mol) wasserfreiem FeCl$_3$ in 3 ml Nitromethan und rührt während 20 Stunden bei Raumtemperatur. Anschließend wäscht man mit wenig Nitromethan und trocknet.

Die in dieser Weise erhaltene FeCl$_3$/Nitromethan/H$_2$SO$_4$-Graphit-Intercalationsverbindung besitzt die in der nachfolgenden Tabelle 6 angegeben in der oben beschriebenen Weise ermittelten Expansionsparameter, die ebenso wie in den vorhergehenden Beispielen bei einer Teilchengröße der Graphit-Intercalationsverbindung von 250 bis 400 μm gemessen wird.

**Tabelle 6**

| | FeCl$_3$/Nitromethan/ H$_2$SO$_4$-GIC |
|---|---|
| Önsel [°C] | 160 |
| Volumen bzgl Einwaage in [% mg$^{-1}$] | 830 |
| Geschwindigkeit im Bereich Onset in [% °C$^{-1}$] | 81 |
| Mittlerer Ausdehnungskoeffizient zwischen TMA-Onset 1 und T$_{100}$ in [K$^{-1}$] | 0.22 |

## BEISPIEL 5

Herstellung einer FeCl$_3$/Nitroethan/H$_2$SO$_4$-Graphit-Intercalationsverbindung (FeCl$_3$/Nitroethan/H$_2$SO$_4$-GIC)

Nach der Verfahrensweise von Beispiel 4, jedoch unter Verwendung von Nitroethan als Intercalatverbindung und als Lösungsmittel bereitet man die Titelverbindung.

Die Expansionparameter dieser Verbindung bei einer Teilchengröße von 250 bis 400 μm sind in der nachfolgenden Tabelle 7 aufgeführt.

**Tabelle 7**

| | FeCl$_3$/ Nitroethan/ H$_2$SO$_4$-GIC |
|---|---|
| Onset [°C] | 182 |
| Volumen bzgl. Einwaage in [mg$^{-1}$] | 364 |
| Geschwindigkeit im Bereich Onset in [% °C$^{-1}$] | 17.59 |
| Mittlerer Ausdehnungskoeffizient zwischen TMA-Onset 1 und T$_{100}$ in [K$^{-1}$] | 0.089 |

## BEISPIEL 6

Herstellung einer FeCl$_3$/1-Nitropropan/H$_2$SO$_4$-Graphit-Intercalationsverbindung (FeCl$_3$/1-Nitropropan/H$_2$SO$_4$-GIC)

Nach der Verfahrensweise des Beispiels 4, jedoch unter Verwendung von 1-Nitropropan als Intercalatverbindung und als Lösungsmittel bereitet man die Titelverbindung.

Die Expansionparameter dieser Graphit-Intercalationsverbindung bei einer Teilchengröße von 250 bis 400 μm sind in der nachfolgenden Tabelle 8 aufgeführt.

**Tabelle 8**

| | FeCl$_3$ / 1-Nitropropan / H$_2$SO$_4$-GIC |
|---|---|
| Onset [°C] | 169 |
| Volumen bzgl. Einwaage in [% mg$^{-1}$] | 291 |
| Geschwindigkeit im Bereich Onset in [% °C$^{-1}$] | 21,94 |
| Mittlerer Ausdehnungskoeffizient zwischen TMA-Onset 1 und T$_{100}$ in [K$^{-1}$] | 0.060 |

**BEISPIEL 7**

Herstellung einer FeCl$_3$/Nitromethan/H$_2$SO$_4$/HNO$_3$-Graphit-Intercalationsverbindung (FeCl$_3$/ Nitromethan/H$_2$SO$_4$/ HNO$_3$-GIC)

Man legt zunächst 5 g (0,42 Mol) Graphit in einem 100 ml Rundkolben vor, versetzt ihn mit 3,2 ml (0,07 Mol) HNO$_3$ und 3,75 ml (0,07 Mol) H$_2$SO$_4$ (95 bis 97%) und rührt während 1 1/2 Stunden bei Raumtemperatur. Anschließend wäscht man den Graphit mit Wasser bis zu einem pH-Wert von 3 bis 4 und trocknet ihn.

Anschließend setzt man ein 1 g (84 mMol) des in dieser Weise erhaltenen H$_2$SO$_4$/HNO$_3$-Graphits nach der in Beispiel 4 beschriebenen Weise mit Nitromethan um.

Die Expansionparameter der in dieser Weise erhaltenen FeCl$_3$/Nitromethan/ H$_2$SO$_4$/HNO$_3$-Graphit-Intercalationsverbindung mit einer Teilchengröße von 250 bis 400 $\mu$m sind in der nachfolgenden Tabelle 9 zusammengestellt.

**Tabelle 9**

|  | FeCl$_3$/ Nitromethan / H$_2$SO$_4$HNO$_3$-GIC |
|---|---|
| Onset [°C] | 142 |
| Volumen bzgl. Einwaage in [% mg$^{-1}$] | 313 |
| Geschwindigkeit im Bereich Onset in [% °C$^{-1}$] | 17.29 |
| Mittlerer Ausdehnungskoeffizient zwischen TMA-Onset 1 und T$_{100}$ in [K$^{-1}$] | 0.098 |

**BEISPIEL 8**

Man stellt 1,92 kg einer Acrylatdispersion auf der Grundlage eines n-Butylacrylat/Vinylacetat-Copolymers mit einem pH-Wert von 4 bis 5 und einem Wassergehalt von 34 bis 36% (Acronal V 271) im Rührkessel unter Verwendung eines Dissolverrührers mit Ammonium auf einen pH-Wert von 10 ein. Anschließend mischt man unter intensivem Rühren 18 g eines Fungizids, 12 g eines Pigmentverteilers, 12 g eines Emulgators, 360 g Diisononylphthalat als Weichmacher und 108 g Monoethylenglykol als Frostschutzmittel zu. Dann mischt man 389 g Füllstoff und 660 g Aluminium-trihydroxid als Flammschutzadditiv mit dem Dissolver unter und gibt anschließend 209 g (6 Gew.-%) der FeCl$_3$-Nitromethan-Graphit-Intercalationsverbindung von Beispiel 1 zu und mischt gut durch.

Zur Herstellung der Prüfkörper wird ein Teil der erhaltenen intumeszierenden Masse auf einer Untergrundplatte zu einer ca. 5 mm dicken Folie ausgezogen. Die Dichtmasse wird zusammen mit der Untergrundplatte 7 Tage bei 23°C und anschließend während 7 Tagen bei 50°C getrocknet und gehärtet. Aus der erhaltenen Folien werden mit Hilfe eines Stanzeisens Prüfkörper ausgestanzt und gewogen.

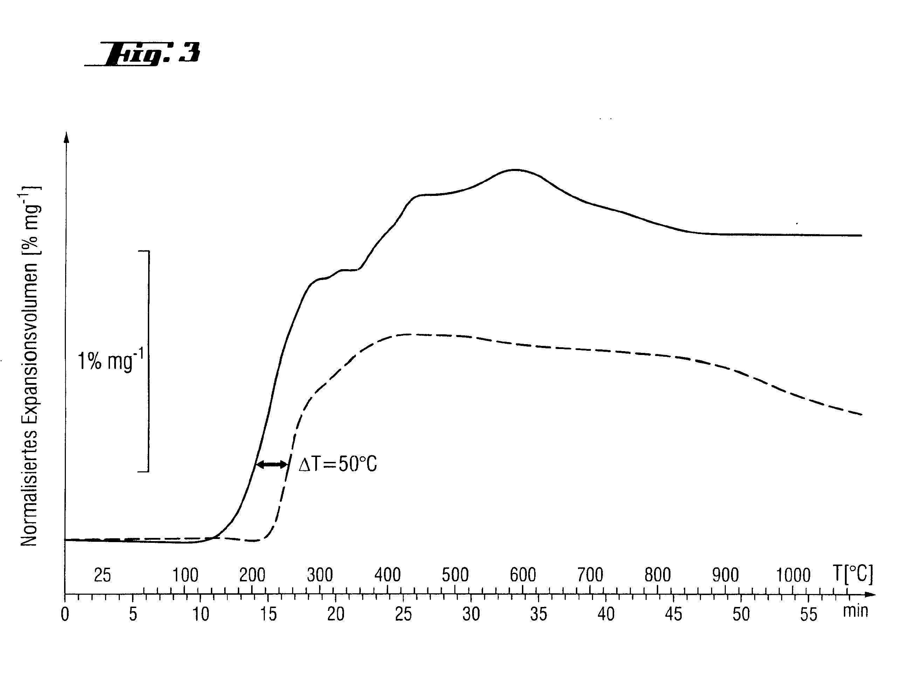

Die Prüfkörper werden in der oben beschriebenen Weise der thermomechanischen Analyse (TMA) unterworfen. Die TMA-Kurve der nach diesem Beispiel erhaltenen Brandschutz-Abdichtung auf Acrylatbasis ist in der Figur 3 wiedergegeben (ausgezogene Linie). Die Figur 3 zeigt als Vergleich dazu die gleiche Brandschutz-Abdichtung, die jedoch unter Verwendung von 6 Gew.-% kommerziellem Schwefelsäuregraphits mit den in der Tabelle 1 angegebenen Eigenschaften hergestellt worden ist (gestrichelte Kurve).

Es läßt sich ohne weiteres erkennen, daß die Expansion des Brandschutz-Additivs, welches nach der Lehre der vorliegenden Erfindung unter Verwendung der das Metallhalogenid und das Nitroalkan enthaltenden thermisch expandierbaren Graphit-Intercalationsverbindung hergestellt worden ist im Vergleich mit dem kommerziellen Schwefelsäuregraphit um 50°C zu tieferen Temperaturen verschoben ist bei verbessertem Expansionsvolumen und größerer Expansionsgeschwindigkeit. Es ist damit ersichtlich, daß die erfindungsgemäße Verwendung zu Brandschutz-Abdichtungen mit überraschend vorteilhaften Eigenschaften führt.

Weiterhin sind die verbesserten Expansionseigenschaften auch im makroskopischen Experiment sichtbar. Hierbei wird in Anlehnung an die Richtlinie des DIBT für intumeszierende Baustoffe, SVA: "Brandverhalten von Bauteilen" (November 1996) eine ausgehärtete Probe der in der obigen Weise hergestellten Brandschutz-Abdichtungsmasse (Scheibe mit einem Durchmesser von 50 mm und einer Höhe von 3 mm) in einem zylindrischen Metallgefäß mit einer Auflast von 100 g belegt und während 30 Minuten isotherm bei 600°c gehalten. Anschließend mißt man die Schaumhöhe (normiert auf die Einwaage). In der nachfolgenden Tabelle 10 sind die Schaumhöhen der Brandschutz-Abdichtmassen im Vergleich wiedergegeben.

**Tabelle 10**

| Brandschutz-Abdichtung | Schaumhöhe [mm g$^{-1}$] |
|---|---|
| 6 Gew.-% FeCl$_3$/Nitroniethan-Graphit | 2.82 |
| 6 Gew.-% kommerzieller Schwefelsäuregraphit | 1.96 |

Es ist ersichtlich, daß die erfindungsgemäße Brandschutz-Abdichtung zu einer Steigerung der Schauhöhe von mehr als 40% führt.

**BEISPIEL 9**

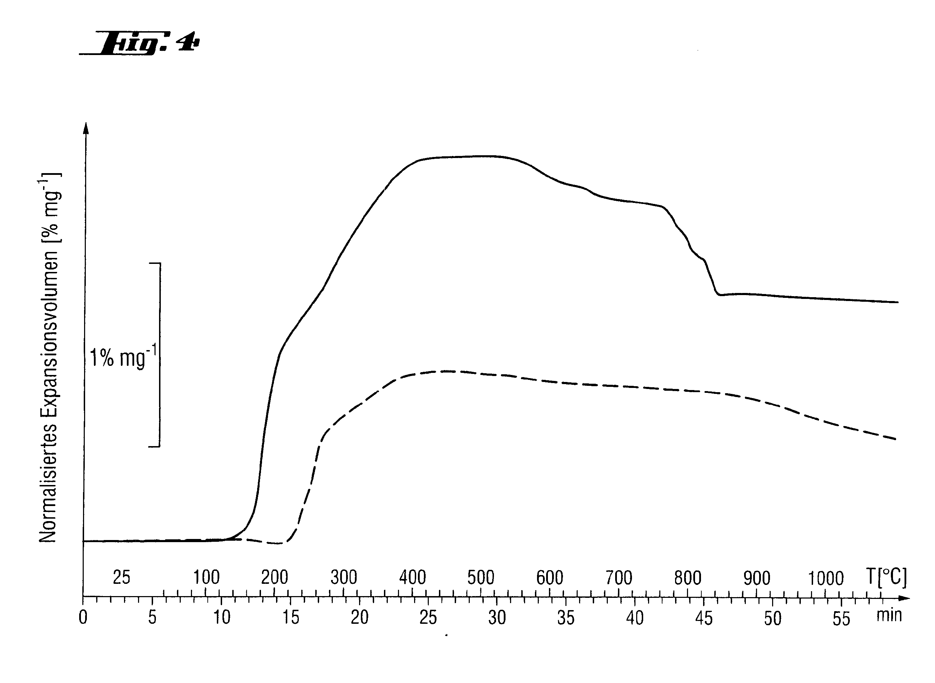

Man wiederholt die Maßnahmen des Beispiels 8 unter Verwendung der FeCl$_3$/ Nitromethan/H$_2$SO$_4$-Graphit-Intercalationsverbindung von Beispiel 4. Die nach der thermomechanischen Analyse (TMA) ermittelten Expansionseigenschaften der erhaltenen Brandschutz-Abdichtung sind in der Figur 4 dargestellt, wobei das Expansionsverhalten der erfindungsgemäßen Brandschutz-Abdichtung mit der durchgezogenen Linie wiedergegeben wird, während die gestrichelte Kurve das Expansionsverhalten einer in gleicher Weise, jedoch unter Verwendung von kommerziellem Schwefelsäuregraphit, wie er in der Tabelle 1 angegeben ist, hergestellten Vergleichs-Brandschutz-Abdichtung zeigt. Es ist wieder zu erkennen, daß durch die erfindungsgemäße Verwendung einer ein Metallhalogenid und ein Nitroalkan enthaltenden thermisch expandierbaren Graphit-Intercalationsverbindung die Expansion um etwa 50°C zu tieferen Temperaturen verschoben ist.

Die mit Hilfe des in Beispiel 8 angegebenen makroskopischen Experiments ermittelten Expansionseigenschaften der erfindungsgemäßen Brandschutz-Abdichtung und der Vergleichs-Brandschutz-Abdichtung sind in der nachfolgenden Tabelle 11 aufgeführt.

**Tabelle 11**

| Brandschutz-Abdichtung | Schaumhöhe [mm g$^{-1}$] |
|---|---|
| 6 Gew.-% FeCl$_3$/Nitromethan/H$_2$SO$_4$-Graphit | 3.63 |
| 6 Gew.-%, kommerzieller Schwefelsäuregraphit | 1.96 |

In diesem Falle läßt sich eine überraschende Steigerung der Schaumhöhe der erfindungsgemäß hergestellten Brandschutz-Abdichtung gegenüber der Vergleichsabdichtung um mehr als 80% erkennen.

**Patentansprüche**

1. Verwendung mindestens einer thermisch expandierbaren Graphit-Intercalationsverbindung, die einen Gehalt an **A)** mindestens einem Metallhalogenid mindestens eines der Elemente Fe, Al, Sb, Zn, Y, Cr und Ni und **B)** mindestens einem Nitroalkan der allgemeinen Formel CH$_3$(CH$_2$)$_n$NO$_2$, worin n eine ganze Zahl mit einem Wert von 0 bis 10 bedeutet, sowie deren Strukturisomere oder Mischungen aufweist, als intumeszierendes Brandschutzadditiv in Polymermatrices für die Herstellung von intumeszierenden Brandschutz-Abdichtungen für Durchbrüche, Durchführungen und sonstigen Öffnungen in Wänden, Böden und/oder Decken von Gebäuden.

2. Verwendung nach Anspruch 1, **dadurch gekennzeichnet, daß** die Graphit-Intercalationsverbindung zusätzlich einen Gehalt an **C)** mindestens einem Vertreter der H$_2$SO$_4$, CH$_3$COOH und HNO$_3$ umfassenden Gruppe von Säuren als Intercalatverbindung aufweist.

3. Verwendung nach Anspruch 1 oder 2, **dadurch gekennzeichnet, daß** die Graphit-Intercalationsverbindung einen Gehalt an mindestens einem Hydrat mindestens eines der Metallhalogenide FeCl$_3$, AlCl$_3$, SbCl$_5$, ZnCl$_2$, YCl$_3$, CrCl$_3$ und NiCl$_2$ als Intercalatverbindung der Gruppe A) aufweist.

4. Verwendung nach Anspruch 3, **dadurch gekennzeichnet, daß** die Graphit-Intercalationsverbindung als Intercalatverbindung der Gruppe **A)** FeCl$_3$•5 H$_2$O. FeCl$_3$•G H$_2$O, FeCl$_3$•7 H$_2$O, FeCl$_3$•12 H$_2$O und/oder hydrolisiertes FeCl$_3$-Hexahydrat der allgemeinen Formel [FeCl$_n$(H$_2$O)$_{6-n}$]Cl$_{3-n}$•n H$_2$O, in der n eine ganze Zahl mit einem Wert von 1 bis 3 bedeutet, enthält.

5. Verwendung nach mindestens einem der vorhergehenden Ansprüche, **dadurch gekennzeichnet, daß** die Graphit-Intercalationsverbindung als Nitroalkan der Gruppe **B)** Nitromethan, Nitroethan und 1-Nitropropan oder deren Mischungen enthält.

6. Verwendung nach mindestens einem der vorhergehenden Ansprüche, **dadurch gekennzeichnet, daß** die Graphit-Intercalationsverbindung einen Gehalt an $H_2SO_4/HNO_3$, $H_2SO_4/CH_3COOH$ und/oder $CH_3COOH/HNO_3$ als Säure der Gruppe **C)** aufweist.

7. Verwendung nach mindestens einem der vorhergehenden Ansprüche, **dadurch gekennzeichnet, daß** die Graphit-Intercalationsverbindung eine Teilchengröße von 100 bis 1500 $\mu$m, vorzugsweise von 125 bis 1000 $\mu$m aufweist.

8. Verwendung nach mindestens einem der vorhergehenden Ansprüche, **dadurch gekennzeichnet, daß** die Polymermatrix bei Umgebungstemperatur plastoleastisch ist und/oder einen Erweichungspunkt von 120°C besitzt.

9. Verwendung nach Anspruch 8, **dadurch gekennzeichnet, daß** die Polymermatrix als Polymer mindestens einen Vertreter der Polyurethane, plastoelastische Polyurethane, Polyvinylacetate, Polyvinylether, Polyvinylpropionate, Polystyrole, natürliche oder synthetische Kautschuke, Silikone, Poly((meth)acrylate) und Homo- und Copolymere auf der Grundlage von (Meth)acrylaten. Acrylnitril, Vinylestern. Vinylethern, Vinylchlorid und/oder Styrol umfassenden Gruppe sowie Hybridpolymere enthält.

10. Verwendung nach Anspruch 9, **dadurch gekennzeichnet, daß** die Polymermatrix als Polymer Poly(methacrylsäurealkylester), Poly(acrylsäurealkylester). Poly(methacrylsäurearylester), Poly(acrylsäurearylester) und/oder Copolymere davon mit n-Butylacrylat und/oder Styrol enthält.

11. Verwendung nach Anspruch 8, **dadurch gekennzeichnet, daß** die Polymermatrix eine Mischung aus einer wässrigen Polymerdispersion D) und einem niedrigmolekularen, dauerplastischen, flüssigen Polymer E) in einem Gewichtsverhältnis von D) zu E) von 6:1 bis 1 :2,5, vorzugsweise von 4:3 bis 3:4 darstellt.

12. Verwendung nach Anspruch 11, **dadurch gekennzeichnet, daß** die wäßrige Polymerdispersion D) als Polymer mindestens einen Vertreter der Polyurethane, Polyvinylacetate, Polyvinylether, Polyvinylpropionate, Polystyrole, natürliche oder synthetische Kautschuke, Poly((meth)acrylate) und Homound Copolymere auf der Grundlage von (Meth)acrylaten, Acrylnitril, Vinylestern Vinylethern, Vinylchlorid und/oder Styrol umfassenden Gruppe enthält.

13. Verwendung nach Anspruch 12, **dadurch gekennzeichnet, daß** die wäßrige Polymerdispersion D) als als Polymer Poly(methacrylsäurealkylester), Poly(acrylsäurealkylester). Poly(methacrylsäurearylester), Poly(acrylsäurearylester) und/oder Copolymere davon mit n-Butylacrylat, Vinylacetat und/ oder Styrol enthält.

14. Verwendung nach den Ansprüchen 11 bis 13, **dadurch gekennzeichnet, daß** die wäßrige Polymerdispersion D) einen Wassergehalt von 5 bis 60 Gew.-%, vorzugsweise von 20 bis 40 Gew.-% aufweist.

15. Verwendung nach den Ansprüchen 11 bis 14, **dadurch gekennzeichnet, daß** die wäßrige Polymerdispersion D) in einer solchen Menge in der Matrixmasse enthalten ist, daß sich ein Wasseranteil in der Polymermatrix von 0,5 bis 25 Gew.-%, vorzugsweise von 1 bis 10 Gew.-%, ergibt.

16. Verwendung nach den Ansprüchen 11 bis 15, **dadurch gekennzeichnet, daß** das niedrigmolekulare, dauerplastische, flüssige Polymer E) einen K-Wert nach ISO 1628-1 von 9 bis 50 bzw. ein daraus abgeleitetes Molekulargewicht von 250.000 bis 5.000.000 und eine bei 23°C in einer 50%-igen Lösung in Ethylacetat nach DIN ISO 3219 gemessene Viskosität von 40 bis 350 mpa•s aufweist

17. Verwendung nach den Ansprüchen 11 bis 16, **dadurch gekennzeichnet, daß** das niedrigmolekulare, dauerplastische, flüssige Polymer E) mindestens einen Vertreter der Polyurethane, Polyvinylacetate, Polyvinylether, Polvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe enthält.

18. Verwendung nach Anspruch 17, **dadurch gekennzeichnet, daß** das niedrigmolekulare, dauerplastische, flüssige Polymer E) als Polymer Poly(methacrylsäurealkylester), Poly(acrylsäurealkylester), Poly(methacrylsäurearylester), Poly(acrylsäurearylester) und/oder Copolymere davon mit n-Butylacrylat, Vinylacetat und/oder Styrol enthält.

**19.** Verwendung nach mindestens einem der vorhergehenden Ansprüche, **dadurch gekennzeichnet, daß** die Graphit-Intercalationsverbindung in einer Menge von 1 Gew.-% bis 75 Gew.-%, vorzugsweise von 3 Gew.-% bis 30 Gew. % in die Polymermatrix eingebracht wird.

**20.** Verwendung nach mindestens einem der vorhergehenden Ansprüche, **dadurch gekennzeichnet, daß** die Polymermatrix zusätzlich übliche Additive F) in üblichen Mengen enthält.

**21.** Verwendung nach Anspruch 20, **dadurch gekennzeichnet, daß** die Polymermatrix als zusätzliche übliche Additive F) keramisierend wirkende F1), ablativ wirkende(F2), intumeszierende F3) und/oder flammhemmende F4) Brandschutzadditive enthält.

**22.** Verwendung nach Anspruch 21, **dadurch gekennzeichnet, daß** die Polymermatrix als keramisierend wirkende Brandschutzadditive F1) Glasmehl, Glasfritten, Glasfasern, Ammoniumpolyphosphat, Zinkborat, Kaolin, Ton und/oder Bentonit; als ablativ wirkende Brandschutzadditive F2) Aluminiumhydroxid, Aluminiumhydroxid-Trihydrat, Böhmit (AlOOH), Magnesiumhydroxid, Zinkborat und/oder Calciumsulfat; als intumeszierende Brandschutzadditive F3) Vermiculit, Natrium-Borosilikat, gekapseltes Natrium-Borosilikat, Melaminpolyphosphat, Melamincyanurat, Ethylendiaminphosphat, Guanidine, Hydrazine und/oder Tris-2-hydroxyethylcyanurat; und/oder als flammhemmende Brandschutzadditive F4) bromierte Phosphorsäureester, (Cyclo)aliphatische Bromverbindungen, aromatische Bromverbindungen, Phosphorsäureester enthält.

**23.** Verwendung nach Anspruch 20, **dadurch gekennzeichnet, daß** die Polymermatrix als zusätzliche übliche Additive Wasser, Stabilisatoren, Pigmente und/oder Füllstoffe enthält.

**24.** Verwendung nach mindestens einem der vorhergehenden Ansprüche, **dadurch gekennzeichnet, daß** die intumeszierende Brandschutz-Abdichtung als erhärtende formbare Brandschutzmasse oder als vorgefertigter Formgegenstand, insbesondere in Form von Streifen, Ringen oder Platten vorliegt

**25.** Verfahren zur Herstellung nach den vorhergehenden Ansprüchen verwendeten thermisch expandierbaren Graphit-Intercalationsverbindungen, **dadurch gekennzeichnet, daß** man **a)** mindestens ein wasserfreies Metallhalogenid oder ein Metallhalogenid-Hydrat der Gruppe A) in Gegenwart mindestens eines Nitroalkans der Gruppe B) in Graphit intercaliert und dann gegebenenfalls mindestens einen Vertreter der $H_2SO_4$, $CH_3COOH$ und $HNO_3$ umfassenden Gruppe von Intercalatverbindungen C) co-intercaliert oder **b)** in thermisch expandierbare Graphit-Intercalationsverbindungen in die mindestens ein Vertreter der $H_2SO_4$, $CH_3COOH$ und $HNO_3$ umfassenden Gruppe von Säuren C) intercaliert worden ist, mindestens ein Metallhalogenid-Hydrat A) gegebenenfalls in Gegenwart mindestens eines Nitroalkans der Gruppe B) co-intercaliert.

**26.** Verfahren nach Anspruch 25, **dadurch gekennzeichnet, daß** man für die Co-Intercalation Graphit-Intercalationsverbindungen einsetzt, in welche mindestens eine Säure der Gruppe C) unter Verwendung eines Oxidationsmittels mit einem Redoxpotential $E_0$ > 0,55 V intercaliert worden ist.

**27.** Verfahren nach Anspruch 26, **dadurch gekennzeichnet, daß** man für die Co-Intercalation Graphit-Intercalationsverbindungen einsetzt, in welche die mindestens eine Säure der Gruppe C) unter Verwendung von Wasserstoffperoxid, Salpetersäure, eines Alkalimetallbromats, -iodats oder -permanganats, von Mangan(IV)-oxid, eines Cer (IV)-salzes und/oder eines Alkalimetallperoxodisulfats als Oxidationsmittel intercaliert worden ist.

**28.** Verfahren nach den Ansprüchen 26 oder 27, **dadurch gekennzeichnet, daß** man für die Co-Intercalation Graphit-Intercalationsverbindungen einsetzt, in welche die mindestens eine Säure der Gruppe C) unter Anwendung eines Molverhältnisses von Oxidationsmittel zu der Säure der Gruppe C) von 0,001 bis 10, vorzugsweise von 0,01 bis 1 intercaliert worden ist.

**29.** Verfahren nach Anspruch 28, **dadurch gekennzeichnet, daß** man für die Co-Intercalation Graphit-Intercalationsverbindungen einsetzt, in welche das mindestens eine wasserfreie Metallhalogenid beziehungsweise Metallhalogenid-Hydrat der Gruppe A) und/oder die mindestens eine Säure der Gruppe C) unter Verwendung eines organischen Lösungsmittels intercaliert worden ist.

**30.** Verfahren nach Anspruch 29, **dadurch gekennzeichnet, daß** man für die Co-Intercalation Graphit-Intercalationsverbindungen einsetzt, in welche das mindestens eine wasserfreie Metallhalogenid beziehungsweise eine Metallhalogenid-Hydrat der Gruppe A) und/oder die mindestens eine Säure der Gruppe C) unter Verwendung Chloroform, Dimethylformamid. Dimethylsulfoxid. Pyridin, Essigsäure, Trifluoressigsäure und/oder Toluol als organischem Lösungsmittel intercaliert worden ist.

31. Verfahren nach Anspruch 25, **dadurch gekennzeichnet, daß** man für die Co-Intercalation Graphit-Intercalationsverbindungen einsetzt, in welche das mindestens eine wasserfreie Metallhalogenid beziehungsweise eine Metallhalogenid-Hydrat der Gruppe A) durch Festkörperreaktion und/oder in Gegenwart eines oder mehrerer organischer Lösungsmittel intercaliert worden ist.

32. Verfahren nach Anspruch 31, **dadurch gekennzeichnet, daß** man für die Co-Intercalation Graphit-Intercalationsverbindungen einsetzt, die unter Verwendung von Tetrachlorkohlenstoff, Thionychlorid, eines Nitroalkans der allgemeinen Formel $CH_3(CH_2)_nNO_2$, worin n eine ganze Zahl mit einem Wert von 0 bis 10 bedeutet, sowie deren Strukturisomeren, insbesondere von Nitromethan. Nitroethan und/oder 1-Nitropropan, oder Mischungen davon als organischem Lösungsmittel hergestellt worden sind.

33. Verfahren nach mindestens einem der Ansprüche 25 bis 32, **dadurch gekennzeichnet, daß** man die Co-Intercalation in Gegenwart eines Lösungsmittels durchführt.

34. Verfahren nach Anspruch 33, **dadurch gekennzeichnet, daß** man bei der Co-Intercalation der Säuren der Gruppe C) als Lösungsmittel Chloroform, Dimethylformamid, Dimethylsulfoxid, Pyridin, Essigsäure, Trifluoressigsäure und/oder Toluol verwendet und bei der Co-Intercalation der Metallhalogenid-Hydrate der Gruppe A) als Lösungsmittel Tetrachlorkohlenstoff, Thionylchlorid und/oder ein Nitroalkan der allgemeinen Formel $CH_3(CH_2)_nNO_2$, worin n eine ganze Zahl mit einem Wert von 0 bis 10 bedeutet, sowie deren Strukturisomere, insbesondere Nitromethan, Nitroethan und/oder 1-Nitropropan, oder Mischungen davon einsetzt.

35. Verfahren nach den Ansprüchen 25 bis 34, **dadurch gekennzeichnet, daß** man in einer ersten Stufe durch an sich übliche Oxidation und Intercalation von Schwefelsäure in Graphit, gegebenenfalls in einem dafür geeigneten Lösungsmittel, thermisch expandierbare Graphit-Schwefelsäure-Intercalationsverbindungen bildet und in einer zweiten Stufe mit oder ohne Isolation der erhaltenen thermisch expandierbaren Graphit-Schwefelsäure-Intercalationsverbindungen mit $FeCl_3$-Hydrat in einem dafür geeigneten Lösungsmittel umsetzt und dann die thermisch expandierbaren Graphit-Intercalationsverbindungen mit einem Gehalt an Schwefelsäure und $FeCl_3$-Hydrat und dem Lösungsmittel als Intercalatverbindungen isoliert, reinigt und trocknet.

36. Verfahren nach Anspruch 35, **dadurch gekennzeichnet, daß** man die Reinigung durch Waschen mit einem Lösungsmittel bewirkt.

37. Verfahren nach Anspruch 36, **dadurch gekennzeichnet, daß** man als Wasch-Lösungsmittel Wasser oder ein organisches Lösungsmittel, vorzugsweise Tetrachlorkohlenstoff, Chloroform, Dimethylformamid, Dimethylsulfoxid, Pyridin, Essigsäure, Trifluoressigsäure, Toluol und/oder Thionylchlorid, ein Nitroalkan der allgemeinen Formel $CH_3(CH_2)_nNO_2$, worin n eine ganze Zahl mit einem Wert von 0 bis 10 bedeutet, sowie deren Strukturisomere, insbesondere Nitromethan, Nitroethan und/oder 1-Nitropropan, oder Mischungen davon verwendet.

38. Verfahren nach einem der Ansprüche 35 bis 37, **dadurch gekennzeichnet, daß** man die Umsetzung mit $FeCl_3$-Hydrat bei einer Temperatur bereich von -10°C bis 100°C, vorzugsweise bei 10°C bis 50°C, während einer Zeitdauer von 3 Minuten bis 72 Stunden, vorzugsweise 5 bis 48 Stunden, bewirkt.

39. Verfahren nach einem der Ansprüche 35 bis 38, **dadurch gekennzeichnet, daß** man Schwefelsäure bzw. $FeCl_3$-Hydrat in einer Menge von $1{,}0\cdot10^{-4}$ bis 20 Mol, vorzugsweise $1{,}0\cdot10^{-34}$ bis 10 Mol, pro Mol Graphit einsetzt.

**Claims**

1. Use of at least one thermally expandable graphite intercalation compound containing A) at least one metal halide of at least one of the elements Fe, Al, Sb. Zn, Y, Cr and Ni and B) at least one nitroalkane of the general formula $CH_3(CH_2)_nNO_2$, where n is an integer having a value from 0 to 10, as well as structural isomers or mixtures thereof, as an intumescent fire-retardant additive in polymer matrices for the production of intumescent fireproof seals for through holes, ducts and other openings in walls, floors and/or ceilings of buildings.

2. Use according to claim 1, **characterised in that** the graphite intercalation compound additionally contains C) at least one representative of the group of acids including $H_2SO_4$, $CH_3COOH$ and $HNO_3$ as the intercalation compound.

3. Use according to claim 1 or claim 2, **characterised in that** the graphite intercalation compound contains at least one hydrate of at least one of the metal halides Fetch, $AlCl_3$, $SbCl_5$, $ZnCl_2$, $YCl_3$, $CrCl_3$ and $NiCl_2$ as the intercalation compound of group A).

4. Use according to claim 3, **characterised in that** the graphite intercalation compound contains $FeCl_3 \cdot 5H_2O$, $FeCl_3 \cdot 6H_2O$, $FeCl_3 \cdot 7H_2O$, $FeCl_3 \cdot 12H_2O$ and/or hydrolysed $FeCl_3$ hexahydrate of the general formula $\{FeCl_n (H_2O)_{6-n}\}Cl_{3-n} \cdot H_2O$, where n is an integer having a value from 1 to 3, as the intercalation compound of group A).

5. Use according to at least one of the preceding claims, **characterised in that** the graphite intercalation compound contains nitromethane, nitroethane and 1-nitropropane or mixtures thereof as the nitroalkane of group B).

6. Use according to at least one of the preceding claims, **characterised in that** the graphite intercalation compound contains $H_2SO_4/HNO_3$, $H_2SO_4/CH_3COOH$ and/or $CH_3COOH/HNO_3$ as the acid of group C).

7. Use according to at least one of the preceding claims, **characterised in that** the graphite intercalation compound has a particle size of 100 to 1500 $\mu$m, preferably 125 to 1000 $\mu$m.

8. Use according to at least one of the preceding claims, **characterised in that** the polymer matrix is plastoelastic at ambient temperature and/or has a softening point of 120°C.

9. Use according to claim 8, **characterised in that** the polymer matrix contains at least one representative of the group including polyurethanes, plastoelastic polyurethanes, polyvinyl acetates, polyvinyl ethers, polyvinyl propionates, polystyrenes, natural or synthetic rubbers, silicones, poly((meth)acrylates) and homopolymers and copolymers based on (meth)acrylates, acrylonitrile, vinyl esters, vinyl ethers, vinyl chloride and/or styrene, as well as hybrid polymers, as the polymer.

10. Use according to claim 9, **characterised in that** the polymer matrix contains poly(alkyl methacrylates), poly(alkyl acrylates), poly(aryl methacrylates), poly(aryl acrylates) and/or copolymers thereof with n-butyl acrylate and/or styrene as the polymer.

11. Use according to claim 8, **characterised in that** the polymer matrix is a mixture of an aqueous polymer dispersion D) and a low-molecular, permanently plastic, liquid polymer E) in a weight ratio of D) to E) of 6:1 to 1:2.5, preferably 4:3 to 3:4.

12. Use according to claim 11, **characterised in that** the aqueous polymer dispersion D) contains at least one representative of the group including polyurethanes, polyvinyl acetates, polyvinyl ethers, polyvinyl propionates, polystyrenes, natural or synthetic rubbers, silicones, poly((meth)acrylates) and homopolymers and copolymers based on (meth)acrylates, acrylonitrile, vinyl esters, vinyl ethers, vinyl chloride and/or styrene as the polymer.

13. Use according to claim 12, **characterised in that** the aqueous polymer dispersion D) contains poly(alkyl methacrylates), poly(alkyl acrylates), poly(aryl methacrylates), poly(aryl acrylates) and/or copolymers thereof with n-butyl acrylate, vinyl acetate and/or styrene as the polymer.

14. Use according to claims 11 to 13, **characterised in that** the aqueous polymer dispersion D) has a water content of 5 to 60 % by weight, preferably 20 to 40 % by weight.

15. Use according to claims 11 to 14, **characterised in that** the aqueous polymer dispersion D) is present in the matrix compound in such a quantity that the water content of the polymer matrix is 0.5 to 25 % by weight, preferably 1 to 10 % by weight.

16. Use according to claims 11 to 15, **characterised in that** the low-molecular, permanently plastic, liquid polymer E) has a K-value according to ISO 1628-1 of 9 to 50 or a molecular weight derived therefrom of 250 000 to 5 000 000 and a viscosity of 40 to 350 mPa·s measured at 23°C in a 50 % solution in ethyl acetate according to DIN ISO 3219.

17. Use according to claims 11 to 16, **characterised in that** the low-molecular, permanently plastic, liquid polymer E) contains at least one representative of the group including polyurethanes, polyvinyl acetates, polyvinyl ethers, polyvinyl propionates, polystyrenes, natural or synthetic rubbers, poly((meth)acrylates) and homopolymers and copolymers based on (meth)acrylates, acrylonitrile, vinyl esters, vinyl ethers, vinyl chloride and/or styrene.

18. Use according to claim 17, **characterised in that** the low-molecular, permanently plastic, liquid polymer E) contains poly(alkyl methacrylates), poly(alkyl acrylates), poly(aryl methacrylates), poly(aryl acrylates) and/or copolymers thereof with n-butyl acrylate, vinyl acetate and/or styrene as the polymer.

19. Use according to at least one of the preceding claims, **characterised in that** the graphite intercalation compound is introduced into the polymer matrix in a quantity of 1 % by weight to 75 % by weight, preferably 3 % by weight to 30 % by weight.

20. Use according to at least one of the preceding claims, **characterised in that** the polymer matrix additionally contains conventional additives F) in conventional quantities.

21. Use according to claim 20, **characterised in that** the polymer matrix contains ceramic-forming F1), ablative F2), intumescent F3) and/or flame-inhibiting F4) fire-retardant additives as the additional conventional additives F).

22. Use according to claim 21, **characterised in that** the polymer matrix contains glass powder, glass frits, glass fibres, ammonium polyphosphate, zinc borate, kaolin, clay and/or bentonite as the ceramic-forming fire-retardant additives F1), aluminium hydroxide, aluminium hydroxide trihydrate, boehmite (AIOOH), magnesium hydroxide, zinc borate and/or calcium sulphate as the ablative fire-retardant additives F2), vermiculite, sodium borosilicate, encapsulated sodium borosilicate, melamine polyphosphate, melamine cyanurate, ethylene diamine phosphate, guanidine, hydrazine and/or tris(2-hydroxyethyl) cyanurate as the intumescent fire-retardant additives F3) and/or brominated phosphates, (cyclo)aliphatic bromine compounds, aromatic bromine compounds or phosphoric acid esters as the flame-inhibiting fire-retardant additives F4).

23. Use according to claim 20, **characterised in that** the polymer matrix contains water, stabilisers, pigments and/or fillers as the additional conventional additives.

24. Use according to at least one of the preceding claims, **characterised in that** the intumescent fireproof seal is present as a setting, mouldable fire-retardant compound or as a prefabricated moulded article, in particular in the form of strips, rings or panels.

25. Method for the production of thermally expandable graphite intercalation compounds used according to the preceding claims, **characterised in that** a) at least one anhydrous metal halide or a metal halide hydrate of group A) is intercalated into graphite in the presence of at least one nitroalkane of group B) and then optionally at least one representative of the group of intercalation compounds C) including $H_2SO_4$, $CH_3COOH$ and $HNO_3$ is co-intercalated or b) at least one metal halide hydrate A) is co-intercalated into thermally expandable graphite intercalation compounds into which at least one representative of the group of acids C) including $H_2SO_4$, $CH_3COOH$ and $HNO_3$ has been intercalated, optionally in the presence of at least one nitroalkane of group B).

26. Method according to claim 25, **characterised in that** graphite intercalation compounds into which at least one acid of group C) has been intercalated using an oxidising agent with a redox potential $E_0 > 0.55$ V are used for the co-intercalation.

27. Method according to claim 26, **characterised in that** graphite intercalation compounds into which the at least one acid of group C) has been intercalated using hydrogen peroxide, nitric acid, an alkali bromate, iodate or permanganate, manganese(IV) oxide, a cerium(IV) salt and/or an alkali peroxodisulphate as the oxidising agent are used for the co-intercalation.

28. Method according to either of claims 26 or 27, **characterised in that** graphite intercalation compounds into which the at least one acid of group C) has been intercalated using a molar ratio of oxidising agent to the acid of group C) of 0.001 1 to 10, preferably 0.01 to 1, are used for the co-intercalation.

29. Method according to claim 28, **characterised in that** graphite intercalation compounds into which the at least one anhydrous metal halide or metal halide hydrate of group A) and/or the at least one acid of group C) has been intercalated using an organic solvent are used for the co-intercalation.

30. Method according to claim 29, **characterised in that** graphite intercalation compounds into which the at least one anhydrous metal halide or a metal halide hydrate of group A) and/or the at least one acid of group C) has been intercalated using chloroform, dimethyl formamide, dimethyl sulphoxide, pyridine, acetic acid, trifluoroacetic acid and/or toluene as the organic solvent are used for the co-intercalation.

31. Method according to claim 25, **characterised in that** graphite intercalation compounds into which the at least one anhydrous metal halide or a metal halide hydrate of group A) has been intercalated by a solid-state reaction and/or in the presence of one or more organic solvents are used for the co-intercalation.

32. Method according to claim 31, **characterised in that** graphite intercalation compounds produced using carbon tetrachloride, thionyl chloride, a nitroalkane of the general formula $CH_3(CH_2)_nNO_2$, where n is an integer having a value from 0 to 10, as well as its structural isomers, in particular nitromethane, nitroethane and/or 1-nitropropane, or mixtures thereof, as the organic solvent are used for the co-intercalation.

33. Method according to at least one of claims 25 to 32, **characterised in that** the co-intercalation is carried out in the presence of a solvent.

34. Method according to claim 33, **characterised in that** chloroform, dimethyl formamide, dimethyl sulphoxide, pyridine, acetic acid, trifluoroacetic acid and/or toluene is/are used as the solvent for the co-intercalation of the acids of group C) and carbon tetrachloride, thionyl chloride and/or a nitroalkane of the general formula $CH_3(CH_2)_nNO_2$, where n is an integer having a value from 0 to 10, as well as its structural isomers, in particular nitromethane, nitroethane and/or 1-nitropropane, or mixtures thereof, is/are used as the solvent for the co-intercalation of the metal halide hydrates of group A).

35. Method according to claims 25 to 34, **characterised in that**, in a first step, thermally expandable graphite-sulphuric acid intercalation compounds are formed by conventional oxidation and intercalation of sulphuric acid into graphite, optionally in a solvent suitable for this purpose, and, in a second step, are reacted with $FeCl_3$ hydrate in a solvent suitable for this purpose, with or without isolation of the resulting thermally expandable graphite-sulphuric acid intercalation compounds, and then the thermally expandable graphite intercalation compounds containing sulphuric acid and $FeCl_3$ hydrate and the solvent as the intercalation compounds are isolated, purified and dried.

36. Method according to claim 35, **characterised in that** purification is carried out by washing with a solvent.

37. Method according to claim 36, **characterised in that** water or an organic solvent, preferably carbon tetrachloride, chloroform, dimethyl formamide, dimethyl sulphoxide, pyridine, acetic acid, trifluoroacetic acid, toluene and/or thionyl chloride, a nitroalkane of the general formula $CH_3(CH_2)_nNO_2$, where n is an integer having a value from 0 to 10, as well as its structural isomers, in particular
nitromethane, nitroethane and/or 1-nitropropane, or mixtures thereof, is/are used as the washing solvent.

38. Method according to one of claims 35 to 37, **characterised in that** the reaction with $FeCl_3$ hydrate is carried out at a temperature in the range of -10°C to 100°C, preferably at 10°C to 50°C, for a period of 3 minutes to 72 hours, preferably 5 to 48 hours.

39. Method according to one of claims 35 to 38, **characterised in that** sulphuric acid or $FeCl_3$ hydrate is used in a quantity of $1.0 \cdot 10^{-4}$ to 20 moles, preferably $1.0 \cdot 10^{-34}$ to 10 moles, per mole of graphite.

**Revendications**

1. Utilisation d'au moins un composé thermiquement expansible d'intercalation de graphite, ayant une teneur en A) au moins un halogénure de métal d'au moins un des éléments Fe, Al, Sb, Zn, Y, Cr et Ni, et B) au moins un nitro-alcane de formule générale $CH_3(CH_2)_nNO_2$, dans laquelle n représente un nombre entier ayant une valeur de 0 à 10, ainsi que leurs isomères structurels ou mélanges, en tant qu'additif ignifuge intumescent dans des matrices de polymère pour la production de joints ignifuges intumescents pour des orifices de passage, des traversées et d'autres ouvertures dans des murs, des sols et/ou des plafonds de bâtiments.

2. Utilisation selon la revendication 1, **caractérisée en ce que** le composé d'intercalation de graphite a en outre une teneur en C) au moins un représentant du groupe d'acides comportant $H_2SO_4$, $CH_3COOH$ et $HNO_3$, en tant que

composé d'intercalation.

3. Utilisation selon la revendication 1 ou 2, **caractérisée en ce que** le composé d'intercalation de graphite a une teneur en au moins un hydrate d'au moins un des halogénures de métal $FeCl_3$, $AlCl_3$, $SbCl_5$, $ZnCl_2$, $YCl_3$, $CrCl_3$ et $NiCl_2$, en tant que composé d'intercalation du groupe A).

4. Utilisation selon la revendication 3, **caractérisée en ce que** le composé d'intercalation de graphite contient $FeCl_3 \cdot 5$ $H_2O$, $FeCl_3 \cdot 6\ H_2O$, $FeCl_3 \cdot 7\ H_2O$, $FeCl_3 \cdot 12\ H_2O$ et/ou un hexahydrate $FeCl_3$- hydrolysé de formule générale $[FeCl_n (H_2O)_{6-n}]Cl_{3-n} \cdot n\ H_2O$, dans laquelle n représente un nombre entier ayant une valeur de 1 à 3, en tant que composé d'intercalation du groupe A).

5. Utilisation selon au moins une des revendications précédentes, **caractérisée en ce que** le composé d'intercalation de graphite contient du nitrométhane, du nitroéthane et du 1-nitropropane ou leurs mélanges, en tant que nitro-alcane du groupe B).

6. Utilisation selon au moins une des revendications précédentes, **caractérisée en ce que** le composé d'intercalation de graphite a une teneur en $H_2SO_4/HNO_3$, $H_2SO_4/CH_3COOH$ et/ou $CH_3COOH/HNO_3$, en tant qu'acide du groupe C).

7. Utilisation selon au moins une des revendications précédentes, **caractérisée en ce que** le composé d'intercalation de graphite a une taille de particule de 100 à 1 500 $\mu$m, de préférence de 125 à 1 000 $\mu$m.

8. Utilisation selon au moins une des revendications précédentes, **caractérisée en ce que** la matrice de polymère est élasto-plastique à température ambiante et/ou a un point de ramollissement de 120 °C.

9. Utilisation selon la revendication 8, **caractérisée en ce que** la matrice de polymère contient au moins un représentant du groupe comportant des polyuréthanes, des polyuréthanes élasto-plastiques, des acétates de polyvinyle, des éthers de polyvinyle, des propionates de polyvinyle, des polystyrènes, des caoutchoucs naturels ou synthétiques, des silicones, des polyméthacrylates, et des homopolymères et des copolymères à base de méthacrylates, de l'acrylonitrile, des esters vinyliques, des éthers vinyliques, du chlorure de vinyle et/ou du styrène, ainsi que des polymères hybrides, en tant que polymère.

10. Utilisation selon la revendication 9, **caractérisée en ce que** la matrice de polymère contient des polyméthacrylates d'alkyle, des polyacrylates d'alkyle, des polyméthacrylates d'aryle, des polyacrylates d'aryle et/ou des copolymères de ceux-ci avec de l'acrylate de n-butyle et/ou du styrène, en tant que polymère.

11. Utilisation selon la revendication 8, **caractérisée en ce que** la matrice de polymère représente un mélange d'une dispersion de polymère aqueuse D) et d'un polymère E) liquide, duroplastique, de faible poids moléculaire dans un rapport de poids de D) sur E) de 6:1 à 1:2,5, de préférence de 4:3 à 3:4.

12. Utilisation selon la revendication 12, **caractérisée en ce que** la dispersion de polymère aqueuse D) contient au moins un représentant du groupe comportant des polyuréthanes, des acétates de polyvinyle, des éthers de polyvinyle, des propionates de polyvinyle, des polystyrènes, des caoutchoucs naturels ou synthétiques, des polyméthacrylates, et des homopolymères et des copolymères basés sur des méthacrylates, de l'acrylonitrile, des esters vinyliques, des éthers vinyliques, du chlorure de vinyle et/ou du styrène, en tant que polymère.

13. Utilisation selon la revendication 12, **caractérisée en ce que** la dispersion de polymère aqueuse D) contient des polyméthacrylates d'alkyle, des polyacrylates d'alkyle, des polyméthacrylates d'aryle, des polyacrylates d'aryle et/ou des copolymères de ceux-ci avec de l'acrylate de n-butyle, de l'acétate de vinyle et/ou du styrène, en tant que polymère.

14. Utilisation selon les revendications 11 à 13, **caractérisée en ce que** la dispersion de polymère aqueuse D) a une teneur en eau de 5 à 60 % en poids, de préférence de 20 à 40 % en poids.

15. Utilisation selon les revendications 11 à 14, **caractérisée en ce que** la dispersion de polymère aqueuse D) est contenue dans la composition de matrice dans une quantité telle qu'une teneur en eau dans la matrice de polymère représente de 0,5 à 25 % en poids, de préférence de 1 à 10 % en poids.

16. Utilisation selon les revendications 11 à 15, **caractérisée en ce que** le polymère E) liquide, duroplastique, de faible poids moléculaire a une valeur K, déterminée selon l'ISO 1628-1, de 9 à 50 ou un poids moléculaire dérivé de celle-ci de 250 000 à 5 000 000, et une viscosité mesurée selon DIN ISO 3219 dans une solution à 50 % dans l'acétate d'éthyle de 40 à 350 mPa•s.

17. Utilisation selon les revendications 11 à 16, **caractérisée en ce que** le polymère E) liquide, duroplastique, de faible poids moléculaire contient au moins un représentant du groupe comportant des polyuréthanes, des acétates de polyvinyle, des éthers de polyvinyle, des propionates de polyvinyle, des polystyrènes, des caoutchoucs naturels ou synthétiques, des polyméthacrylates, et des homopolymères et des copolymères basés sur des méthacrylates, de l'acrylonitrile, des esters vinyliques, des éthers vinyliques, du chlorure de vinyle et/ou du styrène.

18. Utilisation selon la revendication 17, **caractérisée en ce que** le polymère E) liquide, duroplastique, de faible poids moléculaire contient des polyméthacrylates d'alkyle, des polyacrylates d'alkyle, des polyméthacrylates d'aryle, des polyacrylates d'aryle et/ou des copolymères de ceux-ci avec de l'acrylate de n-butyle, de l'acétate de vinyle et/ou du styrène, en tant que polymère.

19. Utilisation selon au moins une des revendications précédentes, **caractérisée en ce que** le composé d'intercalation de graphite est introduit dans la matrice de polymère dans une quantité de 1 % en poids à 75 % en poids, de préférence de 3 % en poids à 30 % en poids.

20. Utilisation selon au moins une des revendications précédentes, **caractérisée en ce que** la matrice de polymère contient en plus des additifs F) habituels, en quantités usuelles.

21. Utilisation selon la revendication 20, **caractérisée en ce que** la matrice de polymère contient des additifs ignifuges ayant un effet céramisant F1), ayant un effet ablatif F2), ayant un effet intumescent F3) et/ou ayant un effet retardateur de flamme F4), en tant qu'additifs F) habituels supplémentaires.

22. Utilisation selon la revendication 21, **caractérisée en ce que** la matrice de polymère contient en tant qu'additif ignifuge ayant un effet céramisant F1), du verre en poudre, du verre fritté, des fibres de verre, du polyphosphate d'ammonium, du borate de zinc, du kaolin, de l'argile et/ou de la bentonite, en tant qu'additif ignifuge ayant un effet ablatif F2), de l'hydroxyde d'aluminium, du trihydrate d'hydroxyde d'aluminium, de la boehmite (AlOOH), de l'hydroxyde de magnésium, du borate de zinc et/ou du sulfate de calcium, en tant qu'additif ignifuge ayant un effet intumescent F3), de la vermiculite, du borosilicate de sodium, du borosilicate de sodium encapsulé, du polyphosphate de mélamine, du cyanurate de mélamine, du phosphate d'éthylènediamine, de la guanidine, de l'hydrazine et/ou du cyanurate de tris-2-hydroxyéthyle, et/ou en tant qu'additif ignifuge ayant un effet retardateur de flamme F4), des esters de phosphate bromés, des composés bromés cycloaliphatiques, des composés bromés aromatiques et/ou des esters de phosphate.

23. Utilisation selon la revendication 20, **caractérisée en ce que** la matrice de polymère contient de l'eau, des stabilisateurs, des pigments et/ou des charges, en tant qu'additifs habituels supplémentaires.

24. Utilisation selon au moins une des revendications précédentes, **caractérisée en ce que** le joint ignifuge intumescent est présent sous forme de composition ignifuge moulable, durcissable ou sous forme d'objet moulé préfabriqué, en particulier sous forme de bandes, de couronnes ou de panneaux.

25. Procédé pour fabriquer des composés thermiquement expansibles d'intercalation de graphite, utilisés selon les revendications précédentes, **caractérisé en ce que** a) au moins un halogénure de métal anhydre ou un hydrate d'halogénure de métal du groupe A) est intercalé dans le graphite en présence d'au moins un nitro-alcane du groupe B), puis, facultativement, au moins un représentant du groupe de composés d'intercalation C) comportant $H_2SO_4$, $CH_3COOH$ et $HNO_3$, est co-intercalé, ou b) au moins un hydrate d'halogénure de métal A), facultativement en présence d'au moins un nitro-alcane du groupe B), est co-intercalé dans les composés thermiquement expansibles d'intercalation de graphite, dans lesquels au moins un représentant du groupe d'acides C) comportant $H_2SO_4$, $CH_3COOH$ et $HNO_3$, a été intercalé.

26. Procédé selon la revendication 25, **caractérisé en ce que** des composés d'intercalation de graphite sont utilisés pour la co-intercalation, dans lequel au moins un acide du groupe C) a été intercalé en utilisant un agent oxydant ayant un potentiel redox $E_0 > 0,55$ V.

27. Procédé selon la revendication 26, **caractérisé en ce que** des composés d'intercalation de graphite sont utilisés pour la co-intercalation, dans lequel le au moins un acide du groupe C) a été intercalé en utilisant du peroxyde d'hydrogène, de l'acide nitrique, un bromate, iodate ou permanganate de métal alcalin, de l'oxyde de manganèse (IV), un sel de cérium (IV) et/ou un péroxodi-sulfate de métal alcalin, en tant qu'agent oxydant.

28. Procédé selon les revendications 26 ou 27, **caractérisé en ce que** des composés d'intercalation de graphite sont utilisés pour la co-intercalation, dans lequel le au moins un acide du groupe C) a été intercalé en utilisant un rapport molaire d'agent oxydant sur l'acide du groupe C) de 0,001 à 10, de préférence de 0,01 à 1.

29. Procédé selon la revendication 28, **caractérisé en ce que** des composés d'intercalation de graphite sont utilisés pour la co-intercalation, dans lequel le au moins un halogénure de métal anhydre ou un hydrate d'halogénure de métal du groupe A) et/ou le au moins un acide du groupe C) a été intercalé en utilisant un solvant organique.

30. Procédé selon la revendication 29, **caractérisé en ce que** des composés d'intercalation de graphite sont utilisés pour la co-intercalation, dans lequel le au moins un halogénure de métal anhydre ou un hydrate d' halogénure de métal du groupe A) et/ou le au moins un acide du groupe C) a été intercalé en utilisant du chloroforme, du diméthylformamide, du diméthylsulfoxyde, de la pyridine, de l'acide acétique, de l'acide trifluoroacétique et/ou du toluène, en tant que solvant organique.

31. Procédé selon la revendication 25, **caractérisé en ce que** des composés d'intercalation de graphite sont utilisés pour la co-intercalation, dans lequel le au moins un halogénure de métal anhydre ou un hydrate d'halogénure de métal du groupe A) a été intercalé par une réaction à l'état solide et/ou en présence d'un ou plusieurs solvants organiques.

32. Procédé selon la revendication 31, **caractérisé en ce que** des composés d'intercalation de graphite sont utilisés pour la co-intercalation, lesquels composés ont été produits en utilisant du tétrachlorure de carbone, du chlorure de thionyle, un nitro-alcane de formule générale $CH_3(CH_2)_nNO_2$, dans laquelle n représente un nombre entier ayant une valeur de 0 à 10, ainsi que leurs isomères structurels, en particulier le nitrométhane, le nitroéthane et/ou le 1-nitropropane, ou des mélanges de ceux-ci, en tant que solvant organique.

33. Procédé selon au moins une des revendications 25 à 32, **caractérisé en ce que** la co-intercalation est exécutée en présence d'un solvant.

34. Procédé selon la revendication 33, **caractérisé en ce que** du chloroforme, du diméthylformamide, du diméthylsulfoxyde, de la pyridine, de l'acide acétique, de l'acide trifluoroacétique et/ou du toluène sont utilisés comme solvant pour la co-intercalation des acides du groupe C), et du tétrachlorure de carbone, du chlorure de thionyle et/ou un nitro-alcane de formule générale $CH_3(CH_2)_nNO_2$, dans laquelle n représente un nombre entier ayant une valeur de 0 à 10, ainsi que leurs isomères structurels, en particulier le nitrométhane, le nitroéthane et/ou le 1-nitropropane, ou des mélanges de ceux-ci, sont utilisés comme solvant pour la co-intercalation des hydrates d'halogénure de métal du groupe A).

35. Procédé selon les revendications 25 à 34, **caractérisé en ce que** des composés thermiquement expansibles d'intercalation de graphite-acide sulfurique sont formés lors d'une première étape par les oxydation et intercalation habituelles en elles-mêmes de l'acide sulfurique dans le graphite, facultativement dans un solvant adapté dans ce but, et réagissent lors d'une seconde étape, avec ou sans isolation des composés thermiquement expansibles d'intercalation de graphite-acide sulfurique obtenus avec un hydrate $FeCl_3$ dans un solvant adapté dans ce but, puis les composés thermiquement expansibles d'intercalation de graphite, contenant de l'acide sulfurique et de l'hydrate $FeCl_3$ et le solvant en tant que composés d'intercalation, sont isolés, purifiés et séchés.

36. Procédé selon la revendication 35, **caractérisé en ce que** la purification est exécutée par lavage à l'aide d'un solvant.

37. Procédé selon la revendication 36, **caractérisé en ce que** de l'eau ou un solvant organique, de préférence du tétrachlorure de carbone, du chloroforme, du diméthylformamide, du diméthylsulfoxyde, de la pyridine, de l'acide acétique, de l'acide trifluoroacétique, du toluène et/ou du chlorure de thionyle, un nitro-alcane de formule générale $CH_3(CH_2)_nNO_2$, dans laquelle n représente un nombre entier ayant une valeur de 0 à 10, ainsi que leurs isomères structurels, en particulier le nitrométhane, le nitroéthane et/ou le 1-nitropropane, ou des mélanges de ceux-ci, sont utilisés comme solvant de lavage.

38. Procédé selon l'une quelconque des revendications 35 à 37, **caractérisé en ce que** la réaction avec l'hydrate $FeCl_3$

est exécutée à une température dans la plage de - 10 °C à 100 °C, de préférence de 10 °C à 50 °C, pendant une durée de 3 minutes à 72 heures, de préférence de 5 à 48 heures.

39. Procédé selon l'une quelconque des revendications 35 à 38, **caractérisé en ce que** de l'acide sulfurique ou de l'hydrate $FeCl_3$ est utilisé dans une quantité de $1,0 \cdot 10^{-4}$ à 20 moles, de préférence de $1,0 \cdot 10^{-34}$ à 10 moles par mole de graphite.

Fig. 1

Fig. 1a

Fig. 1b

**Fig. 2:** TMA-Kurve einer Graphit- Intercalationsverbindung

EP 1 489 136 B1

_Fig. 3_

Normalisiertes Expansionsvolumen [% mg$^{-1}$]

1% mg$^{-1}$

$\Delta T = 50°C$

25    100    200    300    400    500    600    700    800    900    1000    T[°C]

0    5    10    15    20    25    30    35    40    45    50    55    min

EP 1 489 136 B1

Fig. 4

EP 1 489 136 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0085121 B
- US 4091083 A

**In der Beschreibung aufgeführte Nicht-Patentliteratur**

- **E. Stumpp.** *Physica,* 1981, 9-16